(19) Europäisches Patentamt
European Patent Office
Office européen des brevets

(11) **EP 2 983 366 A1**

(12) **EUROPEAN PATENT APPLICATION**
published in accordance with Art. 153(4) EPC

(43) Date of publication:
**10.02.2016 Bulletin 2016/06**

(51) Int Cl.:
***H04N 19/51*** (2014.01)

(21) Application number: **14779342.6**

(22) Date of filing: **07.04.2014**

(86) International application number:
**PCT/KR2014/003001**

(87) International publication number:
**WO 2014/163457 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.04.2013 US 201361808909 P**

(71) Applicant: **Samsung Electronics Co., Ltd.**
**Gyeonggi-do 16677 (KR)**

(72) Inventors:
• **CHOI, Byeong-doo**
**Suwon-si**
**Gyeonggi-do 443-725 (KR)**

• **PARK, Min-woo**
**Hwaseong-si**
**Gyeonggi-do 445-762 (KR)**
• **WEY, Ho-cheon**
**Seongnam-si**
**Gyeonggi-do 463-705 (KR)**
• **YOON, Jae-won**
**Seoul 138-891 (KR)**
• **LEE, Jin-young**
**Hwaseong-si**
**Gyeonggi-do 445-828 (KR)**
• **CHO, Yong-jin**
**Seoul 133-771 (KR)**

(74) Representative: **Appleyard Lees**
**15 Clare Road**
**Halifax HX1 2HY (GB)**

(54) **VIDEO STREAM CODING METHOD ACCORDING TO PREDICTION STRUCTURE FOR MULTI-VIEW VIDEO AND DEVICE THEREFOR, AND VIDEO STREAM DECODING METHOD ACCORDING TO PREDICTION STRUCTURE FOR MULTI-VIEW VIDEO AND DEVICE THEREFOR**

(57)     Provided is a videostream decoding method including obtaining, for encoded current-view image data and from a videostream with respect to encoded images of a plurality of layers, Advanced Motion Vector Prediction (AMVP) mode prediction information generated by using a candidate list including two candidates, and a motion vector prediction flag indicating a candidate that is from among the two candidates included in the candidate list and is used to generate the AMVP mode prediction information, and including generating motion-compensated current-view image data by using at least one of current-view image data and another-view image data based on the obtained information, and thus decoding a current-view image.

FIG. 2A

**Description**

TECHNICAL FIELD

The present disclosure relates to video encoding and decoding methods of encoding an image sequence of multi and decoding a received videostream of multi.

BACKGROUND ART

As hardware for reproducing and storing high resolution or high quality video content is being developed and supplied, a need for a video codec for effectively encoding or decoding the high resolution or high quality video content is increasing. According to a video codec of the related art, a video is encoded according to a limited encoding method based on a macroblock having a predetermined size.

Image data of a spatial domain is transformed into coefficients of a frequency domain via frequency transformation. According to a video codec, an image is split into blocks of predetermined size, discrete cosine transformation (DCT) is performed on each block, and frequency coefficients are encoded in block units, for rapid calculation of frequency transformation. Compared with image data of a spatial domain, coefficients of a frequency domain are easily compressed. In particular, since an image pixel value of a spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multilayer video codec encodes and decodes a base layer video and one or more enhancement layer videos. By removing temporal/spatial redundancies of each of a base layer video and an enhancement layer video and by removing redundancy between layers, amounts of data of the base layer video and the enhancement layer video may be reduced.

DETAILED DESCRIPTION OF THE INVENTIVE CONCEPT

TECHNICAL PROBLEM

A multilayer video codec encodes and decodes a base layer video and one or more enhancement layer videos. There is a demand for reducing an amount of video data.

TECHNICAL SOLUTION

According to an aspect of the inventive concept, there is provided a videostream decoding method being performed by a videostream decoding apparatus and including receiving encoded data of a videostream; obtaining prediction information about encoded current-view image data from the received encoded data; and decoding a current-view image by generating motion-compensated current-view image data by using at least one of current-view image data and another-view image data based on the prediction information.

ADVANTAGEOUS EFFECTS

Accordingly, an encoding apparatus and a decoding apparatus according to embodiments may fix the number of candidates as 2 in prediction during an AMVP mode, and thus may specify a motion vector by identifying an index of an AMVP candidate by using a flag, so that the amount of data to be transmitted may be reduced. Also, the encoding apparatus and the decoding apparatus may separately signal whether an inter-view candidate is used for each of a merge mode and the AMVP mode.

DESCRIPTION OF THE DRAWINGS

FIG. 1A illustrates a block diagram of a videostream encoding apparatus, according to one or more embodiments.
FIG. 1B illustrates a flowchart of a videostream encoding method, according to one or more embodiments.
FIG. 2A illustrates a block diagram of a videostream decoding apparatus, according to one or more embodiments.
FIG. 2B illustrates a flowchart of a videostream decoding method, according to one or more embodiments.
FIG. 3 illustrates a block diagram conceptually illustrating an example of generating the merge list including six candidates in a first embodiment.

FIG. 4A illustrates a block diagram conceptually illustrating an example of generating an AMVP list including three candidates in a second embodiment.

FIG. 4B illustrates a block diagram conceptually illustrating an example of generating the AMVP list including two candidates in a third embodiment.

FIG. 5 illustrates an inter-layer prediction structure, according to an embodiment.

FIG. 6 illustrates an inter-layer prediction structure with respect to a multiview videostream.

FIG. 7 illustrates a structure of a network abstract layer (NAL) unit.

FIG. 8 illustrates a block diagram of a video encoding apparatus based on coding units of a tree structure, according to an embodiment.

FIG. 9 illustrates a block diagram of a video decoding apparatus based on coding units of a tree structure, according to an embodiment.

FIG. 10 illustrates a diagram for describing a concept of coding units according to an embodiment.

FIG. 11 illustrates a block diagram of an image encoder based on coding units, according to an embodiment.

FIG. 12 illustrates a block diagram of an image decoder based on coding units, according to an embodiment.

FIG. 13 illustrates a diagram illustrating deeper coding units according to depths, and partitions, according to an embodiment.

FIG. 14 illustrates a diagram for describing a relationship between a coding unit and transformation units, according to an embodiment.

FIG. 15 illustrates a plurality of pieces of encoding information according to depths, according to an embodiment.

FIG. 16 is a diagram of deeper coding units according to depths, according to an embodiment.

FIGS. 17, 18, and 19 are diagrams for describing a relationship between coding units, prediction units, and transformation units, according to embodiments.

FIG. 20 illustrates a diagram for describing a relationship between a coding unit, a prediction unit, and a transformation unit, according to encoding mode information of Table 1.

FIG. 21 illustrates a diagram of a physical structure of a disc in which a program is stored, according to an embodiment.

FIG. 22 illustrates a diagram of a disc drive for recording and reading a program by using the disc.

FIG. 23 illustrates a diagram of an overall structure of a content supply system for providing a content distribution service.

FIGS. 24 and 25 illustrate external and internal structures of a mobile phone to which a video encoding method and a video decoding method are applied, according to embodiments.

FIG. 26 illustrates a digital broadcasting system employing a communication system, according to an embodiment.

FIG. 27 is a diagram illustrating a network structure of a cloud computing system using a video encoding apparatus and a video decoding apparatus, according to an embodiment.

BEST MODE

According to an aspect of the inventive concept, there is provided a videostream decoding method being performed by a videostream decoding apparatus and including operations of receiving encoded data of a videostream; obtaining prediction information about encoded current-view image data from the received encoded data; and decoding a current-view image by generating motion-compensated current-view image data by using at least one of current-view image data and another-view image data based on the prediction information.

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

The candidate list may include an inter-view candidate, and may further include one of a spatial candidate and temporal candidates.

The method may further include an operation of obtaining, from the received encoded data, an iv_mv_pred flag indicator indicating that the encoded current-view image data may be decoded by using the inter-view candidate.

The operation of obtaining the prediction information may include an operation of obtaining, from the received encoded data, at least one of a merge_iv_mv_pred_flag indictor and an amvp_iv_mv_pred_flag indicator, wherein the merge_iv_mv_pred_flag indicator indicates that the inter-view candidate is usable so as to perform prediction on the encoded current-view image data according to a merge mode, and the amvp_iv_mv_pred_flag indicator indicates that the inter-view candidate is usable so as to perform prediction on the encoded current-view image data according to an AMVP mode.

The operation of obtaining the indicator may include an operation of obtaining the merge_iv_mv_pred_flag indictor and the amvp_iv_mv_pred_flag indicator, and the merge_iv_mv_pred_flag indictor and the amvp_iv_mv_pred_flag indicator may indicate values independently of each other.

The motion vector prediction flag may indicate whether the AMVP mode prediction information was generated by using the inter-view candidate.

The candidate list may include two candidates from among spatial candidates and temporal candidates.

The motion vector prediction flag may indicate which candidate from among the spatial candidates and the temporal candidates was used to generate the AMVP mode prediction information.

The prediction information may further include merge mode prediction information generated by using a candidate list including the inter-view candidate, and the AMVP mode prediction information may be generated by using a candidate list that does not include the inter-view candidate.

The method may further include obtaining, from the received encoded data, an iv_mv_pred_flag indicator indicating that the encoded current-view image data may be decoded by using the inter-view candidate.

According to another aspect of the inventive concept, there is provided a videostream encoding method being performed by a videostream encoding apparatus and including operations of encoding a current-view image by generating prediction information of the current view image by using at least one of current-view image data and another-view image data, and thus generating encoded current-view image data; and outputting the encoded current-view image data and the prediction information.

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

The candidate list may include an inter-view candidate, and may further include one of a spatial candidate and temporal candidates.

The operation of generating the encoded current-view image data may include an operation of generating an iv_mv_pred_flag indicator indicating that the encoded current-view image data may be decoded by using the inter-view candidate.

The operation of generating the encoded current-view image data may include an operation of generating at least one of a merge_iv_mv_pred_flag indictor and an amvp_iv_mv_pred_flag indicator, wherein the merge_iv_mv_pred_flag indicator indicates that the inter-view candidate is usable so as to perform prediction on the encoded current-view image data according to a merge mode, and the amvp_iv_mv_pred_flag indicator indicates that the inter-view candidate is usable so as to perform prediction on the encoded current-view image data according to an AMVP mode.

The operation of generating the indicator may include an operation of generating the merge_iv_mv_pred_flag indicator and the amvp_iv_mv_pred_flag indicator, so that that whether merge mode prediction information includes the inter-view candidate and whether AMVP mode prediction information includes the inter-view candidate are set independently of each other

The motion vector prediction flag may indicate whether the AMVP mode prediction information was generated by using the inter-view candidate.

The candidate list may include two candidates from among spatial candidates and temporal candidates.

The motion vector prediction flag may indicate which candidate from among the spatial candidates and the temporal candidates was used to generate the AMVP mode prediction information.

The prediction information may further include merge mode prediction information generated by using a candidate list including the inter-view candidate, and the AMVP mode prediction information may be generated by using a candidate list that does not include the inter-view candidate.

The operation of generating the encoded current-view image data may include an operation of generating an iv_mv_pred_flag indicator indicating that the encoded current-view image data may be decoded by using the inter-view candidate.

According to another aspect of the inventive concept, there is provided a videostream decoding apparatus including a receiver configured to receive encoded data of a videostream; and a decoder configured to decode a current-view image by generating motion-compensated current-view image data by using at least one of current-view image data and another-view image data based on prediction information that is about encoded current-view image data and is obtained from the received encoded data.

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

According to another aspect of the inventive concept, there is provided a videostream encoding apparatus including an encoder configured to encode a current-view image by generating prediction information of the current view image by using at least one of current-view image data and another-view image data, and thus to generate encoded current-view image data; and an output unit configured to output the encoded current-view image data and the prediction information.

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

According to another aspect of the inventive concept, there is provided a computer-readable recording medium having recorded thereon a computer program for executing at least one of the videostream decoding and encoding methods, by using a computer.

MODE OF THE INVENTIVE CONCEPT

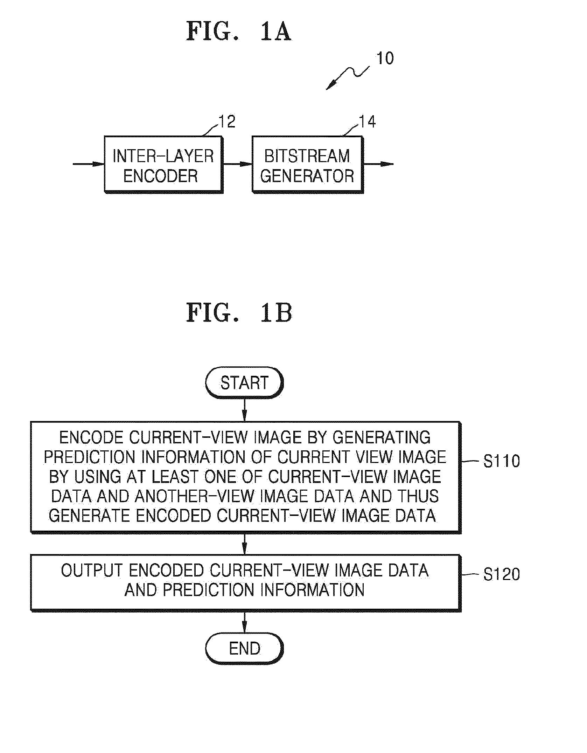

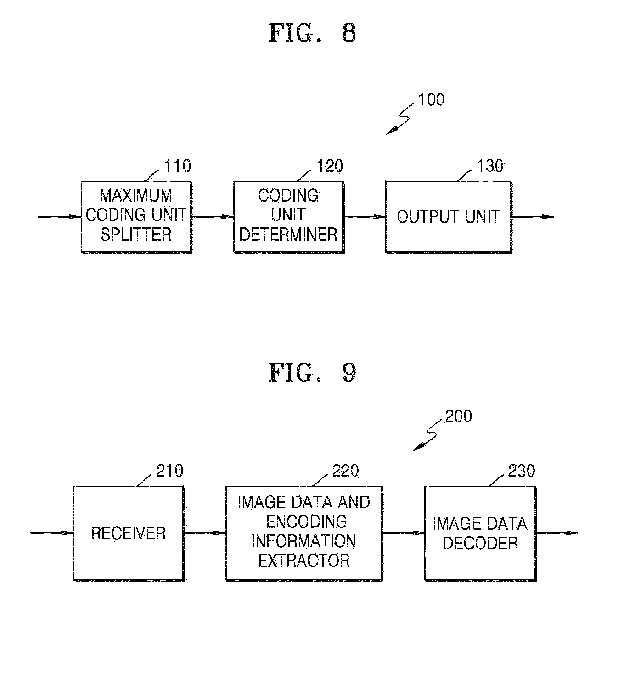

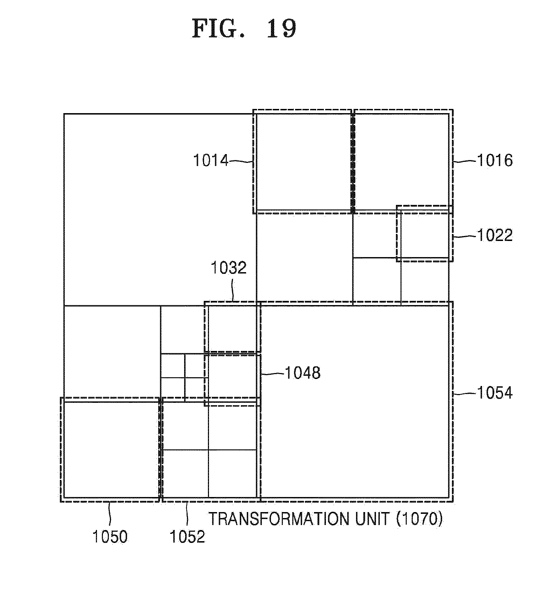

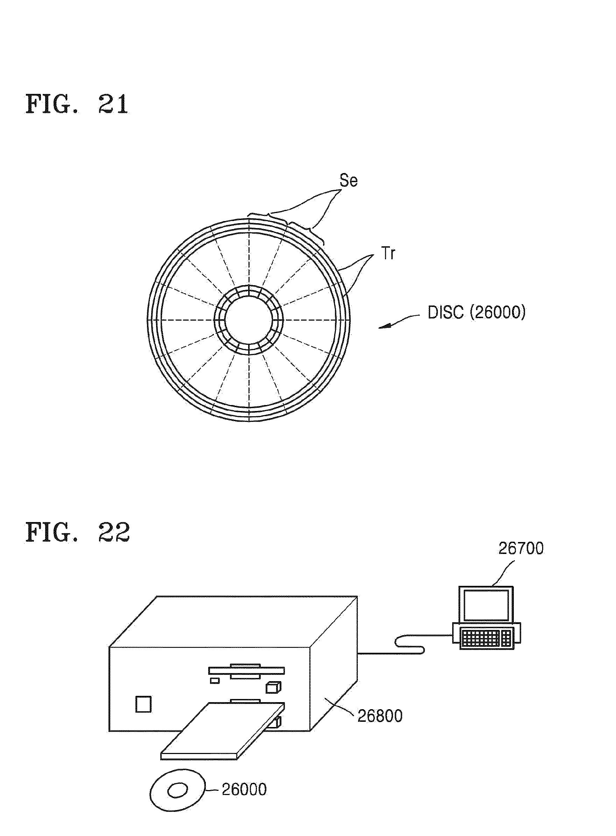

Hereinafter, a videostream encoding apparatus, a videostream decoding apparatus, a videostream encoding method, and a videostream decoding method according to embodiments are provided with reference to FIGS. 1A through 7. Also, a video encoding apparatus and a video decoding apparatus, and a video encoding method and a video decoding method based on coding units of a tree structure according to embodiments are provided with reference to FIGS. 8 through 20. Also, various embodiments to which the videostream encoding method, the videostream decoding method, the video encoding method and the video decoding method according to the embodiments of FIGS. 1A through 20 may be applied are provided with reference to FIGS. 21 through 27. Hereinafter, an 'image' may indicate a still image of a video or a moving picture, i.e., the video itself.

First, with reference to FIGS. 1A through 7, a videostream encoding apparatus and a videostream encoding method, and a videostream decoding apparatus and a videostream decoding method according to one or more embodiments are provided.

FIG. 1A illustrates a block diagram of a videostream encoding apparatus 10, according to one or more embodiments. FIG. 1B illustrates a flowchart of a videostream encoding method, according to one or more embodiments.

The videostream encoding apparatus 10 according to one or more embodiments includes an inter-layer encoder 12 and a bitstream generator 14.

The videostream encoding apparatus 10 according to one or more embodiments may encode each of a plurality of videostreams according to layers by using a scalable video coding method. The videostream encoding apparatus 10 may encode base layer images and enhancement layer images to different layers.

For example, a multiview video may be encoded according to the scalable video coding method. Left-view images may be encoded as the base layer images, and right-view images may be encoded as the enhancement layer images. Alternatively, each of center-view images, left-view images, and right-view images may be encoded, and among these images, the center-view images may be encoded as the base layer images, the left-view images may be encoded as first enhancement-layer images, and the right-view images may be encoded as second enhancement-layer images. A result of encoding the base layer images may be output as a base layer stream, and results of encoding the first enhancement-layer images and the second enhancement-layer images may be output as a first enhancement-layer stream and a second enhancement-layer stream, respectively.

Alternatively, if three or more enhancement layer images exist, base layer images, first enhancement-layer images, second enhancement-layer images, ..., and kth enhancement-layer images may be encoded. Accordingly, a result of encoding the base layer images may be output as a base layer stream, and results of encoding the first, second, ..., and kth enhancement-layer images may be output as a first enhancement-layer stream, a second enhancement-layer stream, ..., and a kth enhancement-layer stream, respectively.

The videostream encoding apparatus 10 according to one or more embodiments may perform inter prediction by which a current image is predicted by referring to images of a same layer. Via the inter prediction, a motion vector indicating motion information between the current image and a reference image, and a residual component between the current image and the reference image may be generated.

Also, the videostream encoding apparatus 10 according to one or more embodiments may perform inter-layer prediction by which enhancement layer images are predicted by referring to base layer images. The videostream encoding apparatus 10 may perform inter-layer prediction by which second enhancement layer images are predicted by referring to first enhancement layer images. Via the inter-layer prediction, a location difference component between a reference image of another layer and the current image, and a residual component between the reference image of the other layer and the current image may be generated.

When the videostream encoding apparatus 10 according to one or more embodiments allows two or more enhancement layers, inter-layer prediction between images of a base layer and images of the two or more enhancement layers may be performed according to a multilayer prediction structure.

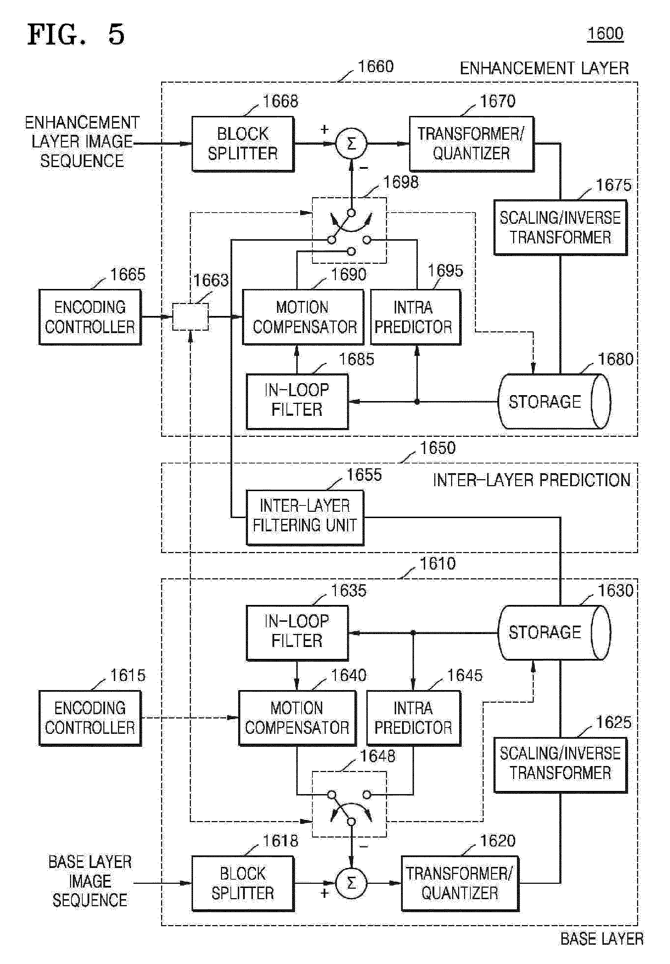

An inter-layer prediction structure will be described in detail with reference to FIG. 5.

The videostream encoding apparatus 10 according to one or more embodiments encodes each of blocks of each of images of a video according to layers. A type of a block may be a square, a rectangle, or a random geometric shape. A block according to an embodiment is not limited to a data unit of a constant size. The block may be a maximum coding unit, a coding unit, a prediction unit, a transformation unit, etc. from among coding units of a tree structure. For example, at each of layers, the videostream encoding apparatus 10 may divide images according to a HEVC standard to blocks of a quadtree structure and may encode the images. Video encoding and decoding methods using the coding units of the tree structure will be described with reference to FIGS. 8 through 20. The inter prediction and the inter-layer prediction may be performed by using a data unit of the coding unit, the prediction unit, or the transformation unit.

The inter-layer encoder 12 according to one or more embodiments may encode an image sequence of each of one or more layers. The inter-layer encoder 12 may generate symbol data by performing source coding operations including the inter prediction or intra prediction on each of the layers. For example, the inter-layer encoder 12 may generate an image block including data by performing the inter prediction or intra prediction on image samples, may generate the symbol data by performing transformation and quantization on the image block, and may generate a bitstream by performing entropy encoding on the symbol data.

The inter-layer encoder 12 may encode a current-view image by generating prediction information of a current view image by using at least one of current-view image data and another-view image data and thus may generate encoded current-view image data, and may transmit the generated prediction information and the generated encoded current-view image data to the bitstream generator 14.

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

In an embodiment, the inter-layer encoder 12 may set the candidate list to include one inter-view candidate and to further include one of a spatial candidate and temporal candidates.

The inter-view candidate indicates prediction units of an adjacent-view image of the current-view image, which are used to encode or to decode a current prediction unit. For example, the inter-view candidate is a candidate used to encode or to decode a current block by using some of coding information including all of motion information, mode information, and reconstructed sample information about the adjacent-view image. The prediction unit may be a block.

The spatial candidate indicates prediction units that are spatially adjacent to the current prediction unit so as to encode or to decode the current prediction unit. For example, the spatial candidate may include, as candidates, prediction units that are included in a current picture and are spatially adjacent to the current prediction unit.

The spatial candidate indicates prediction units that are temporally adjacent to the current prediction unit so as to encode or to decode the current prediction unit. For example, the spatial candidate may include, as candidates, prediction units that are included in a reference picture and are co-located with respect to the current prediction unit, and predictions units that are temporally adjacent to the co-located prediction units.

The inter-layer encoder 12 may generate an iv_mv_pred_flag indicator indicating that the encoded current-view image data may be encoded by using the inter-view candidate. For example, the inter-layer encoder 12 may generate the iv_mv_pred_flag indicator indicating that prediction information including motion prediction information or inter-view prediction information of the encoded current-view image data was generated by using the inter-view candidate.

The inter-layer encoder 12 may generate, instead of the iv_mv_pred_flag indicator, at least one of a merge_iv_mv_pred_flag indicator and an amvp_iv_mv_pred_flag indicator, wherein the merge_iv_mv_pred_flag indicator indicates that the inter-view candidate may be used to perform prediction on the encoded current-view image data according to a merge mode, and the amvp_iv_mv_pred_flag indicator indicates that the inter-view candidate may be used to perform prediction on the encoded current-view image data according to an AMVP mode. The merge_iv_mv_pred_flag indicator and the amvp_iv_mv_pred_flag indicator may be used together.

The inter-layer encoder 12 may generate the merge_iv_mv_pred_flag indicator and the amvp_iv_mv_pred_flag indicator, so that whether merge mode prediction information includes the inter-view candidate and whether AMVP mode prediction information includes the inter-view candidate may be set independently of each other.

When at least one of the merge_iv_mv_pred_flag indicator and the amvp_iv_mv_pred_flag indicator indicating that the encoded current-view image data was encoded by using the inter-view candidate is used, the motion vector prediction flag may indicate whether the AMVP mode prediction information was generated by using the inter-view candidate. For example, an encoding apparatus and a decoding apparatus may configure an AMVP list so that the inter-view candidate is disposed at a particular location of the AMVP list. Therefore, if the motion vector prediction flag indicates the particular location at which the inter-view candidate is disposed in the AMVP list, the motion vector prediction flag may indicate, by a block unit, that the AMVP mode prediction information was generated by using the inter-view candidate.

In an embodiment, the inter-layer encoder 12 may generate a candidate list including two candidates from among spatial candidates and temporal candidates. In this case, a motion vector prediction flag may indicate which candidate from among the spatial candidates and the temporal candidates was used to generate the AMVP mode prediction information. For example, the encoding apparatus and the decoding apparatus may configure an AMVP list so that a spatial candidate or a temporal candidate is disposed at a particular location of the AMVP list. Therefore, according to a value of the motion vector prediction flag in each block, the motion vector prediction flag may indicate that the AMVP mode prediction information was generated by using a particular-type candidate from among the spatial candidates and the temporal candidates.

In another embodiment, the inter-layer encoder 12 may use the inter-view candidate so as to generate the merge mode prediction information, and may not use the inter-view candidate when the inter-layer encoder 12 generates the AMVP mode prediction information. For example, the inter-layer encoder 12 may generate a merge mode candidate list including the inter-view candidate, and may generate the merge mode prediction information by using the merge mode candidate list including the inter-view candidate. For example, the merge mode prediction information may be a candidate index of a candidate selected from the merge mode candidate list. The inter-layer encoder 12 may generate an AMVP mode candidate list including only other types of candidates excluding the inter-view candidate, and may generate the AMVP mode prediction information by using the AMVP mode candidate list. For example, an AMVP mode candidate may include only candidates such as the spatial candidates and the temporal candidates and may exclude the inter-view candidate. For example, as in the embodiment, the inter-layer encoder 12 may generate a candidate list including two candidates from among the spatial candidates and the temporal candidates.

For example, in order to generate merge mode prediction information of an enhancement layer, the inter-layer encoder 12 may use a merge mode candidate list by using candidates including the inter-view candidate, and in order to generate AMVP mode prediction information of the enhancement layer, the inter-layer encoder 12 may configure an AMVP mode candidate list by using candidates excluding the inter-view candidate.

The inter-layer encoder 12 may generate the iv_mv_pred_flag indicator indicating that the encoded current-view image data may be encoded by using the inter-view candidate, and thus, may indicate that the inter-view candidate was used in prediction modes other than the AMVP mode. For example, the inter-layer encoder 12 may indicate that the inter-view candidate was used to generate the merge mode prediction information. The bitstream generator 14 performs a function as an output unit to output the prediction information and the encoded current-view image data. For example, the bitstream generator 14 may output, as a bitstream, the prediction information and the encoded current-view image data received from the inter-layer encoder 12.

Hereinafter, operations of the inter-layer encoder 12 are described in detail. The inter-layer encoder 12 performs at least one prediction of motion prediction and inter-view prediction, and generates a motion mode according to a mode. For example, in a case of a merge mode, the inter-layer encoder 12 generates an index according to the merge mode. In a case of an AMVP mode, a prediction unit generates direction information, a reference picture index, a motion vector residue, and a candidate index. The inter-layer encoder 12 may perform the prediction by a unit of a block. Here, the block includes a block, a macroblock, a coding tree unit (CTU), a coding unit (CU), a prediction unit (PU), and a transformation unit (TU).

In a case of the AMVP mode, the inter-layer encoder 12 may generate an AMVP list having two candidates, and in this regard, a candidate index may be generated as a motion vector prediction flag of 1 bit. According to a preset method, when the motion vector prediction flag is 0, the motion vector prediction flag may indicate a first candidate of the AMVP list, and when the motion vector prediction flag is 1, the motion vector prediction flag may indicate a second candidate of the AMVP list.

When an inter-view candidate is used, the motion vector prediction flag may identify the inter-view candidate included in the AMVP list according to a preset method of arranging candidates in the AMVP list. For example, if it is specified in an encoding apparatus and a decoding apparatus that the inter-view candidate is used as a candidate of a list, the encoding apparatus and the decoding apparatus may locate the inter-view candidate at a particular index of the AMVP list, may indicate a corresponding location as a flag, and thus, the motion vector prediction flag may identify the inter-view candidate.

For example, according to the inventive concept, the AMVP list may maximally include two candidates. The inter-layer encoder 12 of the encoding apparatus and an inter-layer decoder 24 of the decoding apparatus pre-determines whether to locate the inter-view candidate at a first index of the AMVP list or to locate the inter-view candidate at a second index. The inter-layer encoder 12 of the encoding apparatus and the inter-layer decoder 24 of the decoding apparatus generate the AMVP list in such a manner that the inter-view candidate is located at a pre-determined location. When the inter-view candidate in the AMVP list is used to express a motion vector, the inter-layer encoder 12 of the encoding apparatus may transmit, to the decoding apparatus, a flag corresponding to the location of the inter-view candidate in the AMVP list, and by doing so, the inter-layer encoder 12 may separately transmit, to the decoding apparatus, information indicating that the inter-view candidate was used to express the motion vector, from use information of other candidates.

In addition, in order to indicate use of the inter-view candidate according to modes, the inter-layer encoder 12 generates merge_iv_mv_pred_flag that is a flag indicating that the inter-view candidate was used in the merge mode, and generates amvp_iv_mv_pred_flag that is a flag indicating that the inter-view candidate was used in the AMVP mode.

The motion vector prediction flag, the merge_iv_mv_pred_flag, and the amvp_iv_mv_pred_flag, which are generated by the inter-layer encoder 12, may be transferred to the bitstream generator 14, and may be transmitted to the decoding apparatus via a transmission unit.

In more detail, the inter-layer encoder 12 may generate a slice segment by capsulating the motion vector prediction flag generated at each block, and may generate a NAL unit by capsulating the generated slice segment. The generated NAL unit may be transferred to the bitstream generator 14, and may be transmitted to the decoding apparatus via the transmission unit. For example, the motion vector prediction flag generated at each block may be included in a header of the slice segment, and the header of the slice segment may be included in the NAL unit.

Similarly, the inter-layer encoder 12 may generate a parameter set by capsulating at least one of the merge_iv_mv_pred_flag and the amvp_iv_mv_pred_flag, wherein the merge_iv_mv_pred_flag indicates that the inter-view candidate was used in the merge mode and the amvp_iv_mv_pred_flag indicates that the inter-view candidate was used in the AMVP mode. The parameter set includes a video parameter set, a sequence parameter set, and a picture parameter set. For example, the merge_iv_mv_pred_flag and the amvp_iv_mv_pred_flag may be included in extension of the video parameter set. The merge_iv_mv_pred_flag and the amvp_iv_mv_pred_flag may be included in a head of the parameter set. Therefore, the inter-layer encoder 12 may generate at least one of the video parameter set, the sequence parameter set, and the picture parameter set by capsulating at least one of the merge_iv_mv_pred_flag and the amvp_iv_mv_pred_flag. The inter-layer encoder 12 may generate a NAL unit by capsulating the generated parameter set. The generated NAL unit may be transferred to the bitstream generator 14, and may be transmitted to the decoding apparatus via the transmission unit.

FIG. 1B illustrates a flowchart of a videostream encoding method, according to an embodiment. Referring to FIG. 1B, the videostream encoding method performed by the videostream encoding apparatus 10 encodes a current-view image by generating prediction information of a current view image by using at least one of current-view image data and another-view image data and thus generates encoded current-view image data (S110). Next, the videostream encoding apparatus 10 outputs the encoded current-view image data and the prediction information (S120).

The prediction information may include Advanced Motion Vector Prediction Index (AMVP) mode prediction information generated by using a candidate list including two candidates. The prediction information may further include a motion vector prediction flag indicating a candidate from among the two candidates included in the candidate list, which is used in generating the AMVP mode prediction information.

The videostream encoding method according to the embodiment performs motion estimation and thus searches for, from reference pictures, a prediction block that is the most similar block to a coding-target current block. A procedure for searching for the prediction block is the motion estimation. The encoding apparatus may transmit, to the decoding apparatus, motion information about the prediction block and a residue between the prediction block and a current block that are generated as a result of the motion estimation.

A method of transmitting motion information, the method being performed by the encoding apparatus according to an embodiment, will now be described. The encoding apparatus according to the embodiment may transmit motion information as a merge mode or an AMVP mode. In a case of the merge mode, the motion information may be transmitted as an index value of a candidate selected from a merge mode candidate list. In a case of the AMVP mode, the motion information may be transmitted as motion vector information, a reference index value, and an index value of a candidate selected from an AMVP mode candidate list. In another embodiment, the index value of the candidate selected from the AMVP mode candidate list may be transmitted as a flag value of the candidate selected from the AMVP mode candidate list.

Hereinafter, the AMVP mode is described. The encoding apparatus according to the embodiment generates an AMVP list by using at least one candidate. The encoding apparatus may select at least one candidate from among spatial candidates, temporal candidates, and inter-view candidates by using a predetermined method, and may generate the AMVP list by using the at least one selected candidate.

In order to transmit motion information with respect to a prediction block, the encoding apparatus may select a particular candidate from among candidates included in the AMVP list, and may transmit information about the selected candidate to the decoding apparatus. For example, the encoding apparatus may select, as the particular candidate, a candidate having a motion vector that is the least different from a motion vector with respect to the prediction block, and may transmit, as selected candidate information, information for specifying the selected candidate to the decoding apparatus. For example, the information for specifying the selected candidate may be at least one of index information of a picture including the candidate and index information of a location where the candidate is located in an AMVP candidate list. In addition to this, the encoding apparatus may transmit a residue between the motion vector with respect to the prediction block and the motion vector of the selected candidate to the decoding apparatus.

Accordingly, the encoding apparatus and the decoding apparatus may fix the number of candidates as 2 in prediction during the AMVP mode, and thus may specify the motion vector by identifying an index of an AMVP candidate by using a flag, so that the amount of data to be transmitted may be reduced. Also, the encoding apparatus and the decoding apparatus may separately signal whether an inter-view candidate is used for each of the merge mode and the AMVP mode.

Hereinafter, a method of transmitting information of a candidate selected from a list in a merge mode and an AMVP mode will be described.

First, a first embodiment in which candidate information is generated in the merge mode is described below. In the first embodiment, the encoding apparatus may use some candidates from among candidates including inter-view candidates, spatial candidates, and temporal candidates. For example, the encoding apparatus may use six candidates from among the candidates. The encoding apparatus may generate a merge list including the six candidates, according to a predetermined method. The encoding apparatus may determine an index so as to distinguish between the six candidates included in the list.

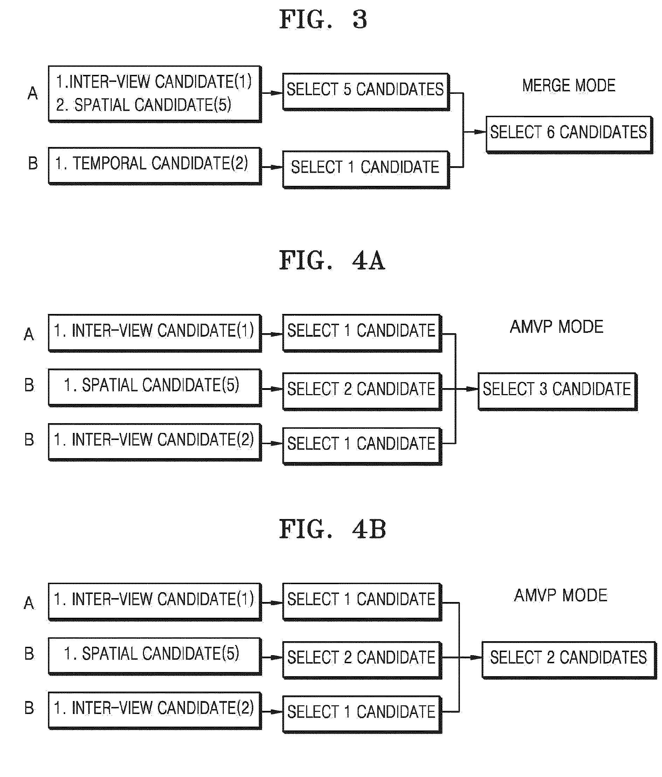

FIG. 3 illustrates a block diagram conceptually illustrating an example of generating the merge list including the six candidates in the first embodiment. As illustrated in the example of FIG. 3, the six candidates are selected by selecting one inter-view candidate and by selecting five spatial candidates, and then five candidates are selected from among the 6 selected candidates. To select five candidates from among six candidates may be obtained via a test, and to select the five candidates from among the six candidates may be performed using a same method in the encoding apparatus and the decoding apparatus. For example, an order of candidates statistically having a motion vector that is the least different from a motion vector with respect to a prediction block may be pre-obtained via the test, and the five candidates from among the six candidates may be selected according to the order in each block.

Then, two temporal candidates are selected, and one candidate is selected from among the selected temporal candidates. To select one candidate from among two candidates may be performed using a same method in the encoding apparatus and the decoding apparatus. For example, an order of candidates statistically having a motion vector that is the least different from a motion vector with respect to a prediction block may be pre-obtained via a test, and one temporal candidate from among the two temporal candidates may be selected according to the order in each block.

Afterward, the five candidates selected from among the inter-view candidate and the spatial candidates and one temporal candidate selected from among the temporal candidates are selected as candidates of the merge list including the six candidates.

The merge list of the first embodiment may use a merge_idx[x0][y0] index so as to indicate a candidate that is finally selected from among the six candidates. merge_idx[x0][y0] is the index indicating a merge candidate in a merge candidate list. x0 and y0 indicates a location (x0, y0) of an upper-left luminance sample of the prediction block based on a location of an upper-left luminance sample of a picture where the prediction block is located. If merge_idx[x0][y0] is not provided, a value of merge_idx[x0][y0] may be used to mean a value of 0.

Next, a second embodiment in which candidate information is generated in the AMVP mode is described below. In the second embodiment, the encoding apparatus may use some candidates from among candidates including inter-view candidates, spatial candidates, and temporal candidates. For example, the encoding apparatus may use three candidates from among the candidates. The encoding apparatus may generate an AMVP list including the three candidates, according to a predetermined method. The encoding apparatus may determine an index so as to distinguish between the three candidates included in the list.

FIG. 4A is a block diagram conceptually illustrating an example of generating the AMVP list including the three candidates in the second embodiment. As illustrated in the example of FIG. 4A, the encoding apparatus selects one inter-view candidate. The encoding apparatus selects five spatial candidates, and then selects two candidates from among the five selected spatial candidates. To select two candidates from among five candidates may be obtained via a test, and to select the two candidates from among the five candidates may be performed using a same method in the encoding apparatus and the decoding apparatus. For example, two spatial candidates may be selected from among the five spatial candidates in an order of candidates statistically having a motion vector that is the least different from a motion vector with respect to a prediction block.

After two temporal candidates are selected, one candidate is selected from among the selected temporal candidates. To select one candidate from among two candidates may be obtained via a test, and to select one candidate from among the two candidates may be performed using a same method in the encoding apparatus and the decoding apparatus. For example, one temporal candidate may be selected from among the two temporal candidates in an order of candidates statistically having a motion vector that is the least different from a motion vector with respect to a prediction block.

Afterward, three candidates are selected from among four selected candidates including one inter-view candidate, the two spatial candidates, and one temporal candidate, and configure the AMVP list. For example, the three candidates may be selected from among the four candidates in an order of candidates statistically having a motion vector that is the least different from a motion vector with respect to a prediction block.

An index may be used to indicate a candidate that is finally selected from among the three candidates in the AMVP list of the second embodiment. For example, the encoding apparatus may use an MVP index about a list 0 and a list 1 so as to distinguish between the three candidates during an AMVP mode. For example, the MVP index may include at least one of mvp_l0_idx[x0][y0] and mvp_l1_idx[x0][y0].

mvp_l0_idx[x0][y0] specifies a motion vector prediction index of the list 0. x0 and y0 indicates a location (x0, y0) of an upper-left luminance sample of the prediction block based on a location of an upper-left luminance sample of a picture where the prediction block is located. If mvp_l0_idx[x0][y0] is not provided, a value of mvp_l0_idx[x0][y0] may be determined to mean a value of 0.

mvp_l1_idx[x0][y0] may be used with mvp_10_idx[x0][y0]. For example, mvp_l1_idx[x0][y0] specifies a motion vector prediction index of the list 1. x0 and y0 indicates a location (x0, y0) of an upper-left luminance sample of the prediction block based on a location of an upper-left luminance sample of a picture where the prediction block is located. If mvp_l1_idx[x0][y0] is not provided, a value of mvp_l1_idx[x0][y0] may be determined to mean a value of 0.

In addition, the encoding apparatus may use a flag so as to inform the decoding apparatus about use of the inter-view candidate while the candidate information is generated during the merge mode or the AMVP mode. For example, the encoding apparatus may generate iv_mv_pred_flag that is a flag indicating that the inter-view candidate was used during the merge mode and the AMVP mode, and may transmit the flag to the decoding apparatus. For example, if the inter-view candidate was used during the merge mode and the AMVP mode, iv_mv_pred_flag may have a value of 1, and if the inter-view candidate is not used during any one of both modes, iv_mv_pred_flag may have a value of 0. As another example, if the inter-view candidate was used during any one of the merge mode and the AMVP mode, iv_mv_pred_flag may have a value of 1, and if the inter-view candidate is not used during both modes, iv_mv_pred_flag may have a value of 0. As in the examples, a method of setting a value of iv_mv_pred_flag may be selectively used according to necessity.

In more detail, iv_mv_pred_flag may be generated in each layer. For example, iv_mv_pred_flag may be generated along with iv_mv_pred_flag[layerId], and iv_mv_pred_flag[layerId] may indicate whether inter-view motion prediction is used in decoding a layer having a layer ID value corresponding to layerId. For example, if a value of iv_mv_pred_flag[layerId] is 0, iv_mv_pred_flag[layerId] indicates that the inter-view motion prediction is not used in decoding a layer having a layer ID corresponding to layerId, and if the value of iv_mv_pred_flag[layerId] is 1, iv_mv_pred_flag[layerId] indicates that the inter-view motion prediction may be used in decoding a layer having a layer ID corresponding to layerId. If iv_mv_pred_flag[layerId] is not provided, a value of iv_mv_pred_flag[layerId] may be determined as 0.

In another embodiment, the encoding apparatus may use the inter-view candidate so as to generate merge mode prediction information, and may not use the inter-view candidate when the encoding apparatus generates AMVP mode prediction information. For example, an AMVP mode candidate may include candidates such as spatial candidates and temporal candidates and may exclude an inter-view candidate. In this case, an iv_mv_pred_flag indicator may indicate that the inter-view candidate was used during prediction modes other than an AMVP mode. For example, in a case where the encoding apparatus and the decoding apparatus are set to use the inter-view candidate so as to generate a merge mode candidate list and are set not to use the inter-view candidate so as to generate an AMVP mode candidate list, the iv_mv_pred_flag indicator may indicate, according to a preset value, that the inter-view candidate was used so as to generate the merge mode prediction information, and was not used during the AMVP mode.

Next, a third embodiment in which candidate information is generated in the AMVP mode is described below. In the third embodiment, the encoding apparatus may use some candidates from among candidates including inter-view candidates, spatial candidates, and temporal candidates. For example, the encoding apparatus may use two candidates from among the candidates. The encoding apparatus may generate an AMVP list including the two candidates, according to a predetermined method. The encoding apparatus may determine a flag so as to distinguish between the two candidates included in the list.

FIG. 4B illustrates a block diagram conceptually illustrating an example of generating the AMVP list including the two candidates in the third embodiment. As illustrated in the example of FIG. 4B, the encoding apparatus selects one inter-view candidate. The encoding apparatus selects five spatial candidates, and then selects two candidates from among the five selected spatial candidates. To select two candidates from among five candidates may be obtained via a test, and to select the two candidates from among the five candidates may be performed using a same method in the encoding apparatus and the decoding apparatus. For example, an order of candidates statistically having a motion vector that is the least different from a motion vector with respect to a prediction block may be pre-determined, and two spatial candidates may be selected from among the five spatial candidates. For example, two candidates having the highest priority from among the five spatial candidates may be selected as the two spatial candidates.

After two temporal candidates are selected, one candidate is selected from among the selected temporal candidates. To select one candidate from among two candidates may be obtained via a test, and to select one candidate from among the two candidates may be performed using a same method in the encoding apparatus and the decoding apparatus. For example, an order of candidates statistically having a motion vector that is the least different from a motion vector with respect to a prediction block may be pre-determined, and according to the determined order, a candidate having the highest priority from among two temporal candidates may be selected as one temporal candidate. For example, a candidate having the highest priority from among two temporal candidates may be selected as one temporal candidate.

Afterward, two candidates are selected from among four selected candidates including one inter-view candidate, the two spatial candidates, and one temporal candidate, and configure the AMVP list. For example, the encoding apparatus may select, by using the aforementioned method, the two candidates from among the four candidates according to the pre-determined order of candidates statistically having the motion vector that is the least different from the motion vector with respect to the prediction block.

A flag may be used to indicate a candidate that is finally selected from among the two candidates in the AMVP list of the third embodiment. The AMVP list in the aforementioned second embodiment may use the index including at least 2 bits so as to distinguish between the three candidates included in the list. However, the AMVP list in the third embodiment only indicates two cases so as to indicate the two candidates, thus, the flag having 1 bit may distinguish between candidates in the list. For example, the encoding apparatus may use an MVP flag about a list 0 and a list 1 so as to distinguish between the two candidates during an AMVP mode. For example, the MVP flag may include at least one of mvp_l0-flag[x0][y0] and mvp_l1_flag[x0][y0].

mvp_l0-flag[x0][y0] specifies a motion vector prediction index of the list 0. x0 and y0 indicates a location (x0, y0) of an upper-left luminance sample of the prediction block based on a location of an upper-left luminance sample of a picture where the prediction block is located. If mvp_l0_flag[x0][y0] is not provided, a value of mvp_l0_flag[x0][y0] may be determined to mean a value of 0.

mvp_l1_flag[x0][y0] may be used with mvp_l0-flag[x0][y0]. For example, mvp_l1_flag[x0][y0] specifies a motion vector prediction index of the list 1. x0 and y0 indicates a location (x0, y0) of an upper-left luminance sample of the prediction block based on a location of an upper-left luminance sample of a picture where the prediction block is located. If mvp_l1_flag[x0][y0] is not provided, a value of mvp_l1_flag[x0][y0] may be determined to mean a value of 0.

Hereinafter, a method of using, by the encoding apparatus, a flag during each of modes so as to inform the decoding apparatus about use of the inter-view candidate while the candidate information is generated during a merge mode or an AMVP mode is described.

Unlike iv_mv_pred_flag described with reference to the first and second embodiments, the encoding apparatus according to a fourth embodiment may separately use the flag so as to inform the decoding apparatus about the use of the inter-view candidate while the candidate information is generated during the merge mode or the AMVP mode.

For example, the encoding apparatus may generate merge_iv_mv_pred_flag that is a flag indicating that the inter-view candidate was used during the merge mode, may generate amvp_iv_mv_pred_flag that is a flag indicating that the inter-view candidate was used during the AMVP mode, and may transmit the flags to the decoding apparatus. merge_iv_mv_pred_flag and amvp_iv_mv_pred_flag may be generated independently of each other by the encoding apparatus, and may be transmitted independently of each other from the encoding apparatus to the decoding apparatus.

For example, if the inter-view candidate was used during the merge mode, merge_iv_mv_pred_flag may have a value of 1, and if the inter-view candidate was not used during the merge mode, iv_mv_pred_flag may have a value of 0. If the inter-view candidate was used during the AMVP mode, amvp_iv_mv_pred_flag may have a value of 1, and if the inter-view candidate was not used during the AMVP mode, iv_mv_pred_flag may have a value of 0.

In more detail, each of merge_iv_mv_pred_flag and amvp_iv_mv_pred_flag may be generated in each layer. For example, merge_iv_mv_pred_flag may be generated along with merge_iv_mv_pred_flag[layerId], and merge_iv_mv_pred_flag[layerId] may indicate whether inter-view motion prediction is used, during the merge mode, in decoding a layer having a layer ID value corresponding to layerId. For example, if a value of merge_iv_mv_pred_flag[layerId] is 0, merge_iv_mv_pred flag[layerId] indicates that the inter-view motion prediction is not used, during the merge mode, in decoding a layer having a layer ID corresponding to layerId, and if the value of merge_iv_mv_pred_flag[layerId] is 1, merge_iv_mv_pred_flag[layerId] indicates that the inter-view motion prediction may be used, during the merge mode, in decoding a layer having a layer ID corresponding to layerId. If merge_iv_mv_pred_flag[layerId] is not provided, a value of merge_iv_mv_pred_flag[layerId] may be determined as 0.

Similarly, amvp_iv_mv_pred_flag may be generated along with amvp_iv_mv_pred_flag[layerId], and amvp_iv_mv_pred_flag[layerId] may indicate whether inter-view motion prediction is used, during the AMVP mode, in decoding a layer having a layer ID value corresponding to layerId. For example, if a value of amvp_iv_mv_pred_flag[layerId] is 0, amvp_iv_mv_pred_flag[layerId] indicates that the inter-view motion prediction is not used, during the AMVP mode, in decoding a layer having a layer ID corresponding to layerId, and if the value of amvp_iv_mv_pred_flag[layerId] is 1, amvp_iv_mv_pred_flag[layerId] indicates that the inter-view motion prediction may be used, during the AMVP mode, in decoding a layer having a layer ID corresponding to layerId. If amvp_iv_mv_pred_flag[layerId] is not provided, a value of amvp_iv_mv_pred_flag[layerId] may be determined as 0.

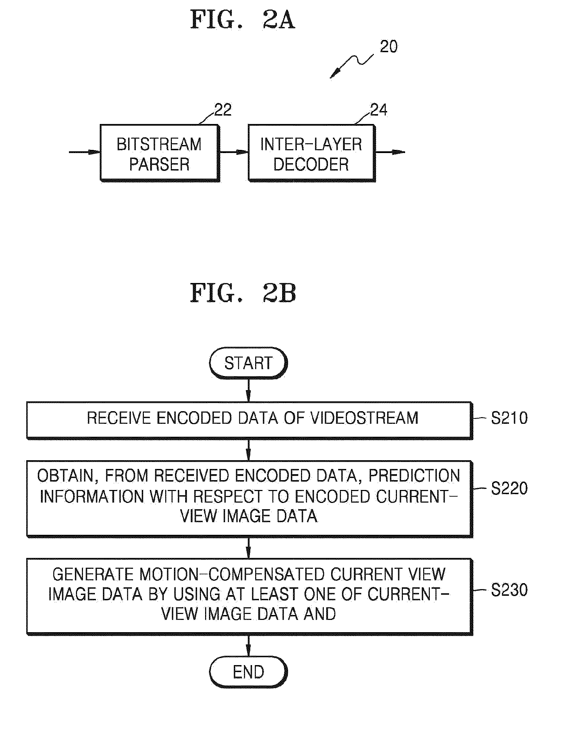

FIG. 2A illustrates a block diagram of a videostream decoding apparatus 20, according to one or more embodiments. FIG. 2B illustrates a flowchart of a videostream decoding method, according to one or more embodiments.

The videostream decoding apparatus 20 according to one or more embodiments includes a bitstream parser 22 and an inter-layer decoder 24.

The videostream decoding apparatus 20 may receive a base layer stream and an enhancement layer stream. Based on a scalable video coding method, the videostream decoding apparatus 20 may receive, as the base layer stream, the base layer stream including encoded data of base layer images, and may receive, as the enhancement layer stream, the enhancement layer stream including encoded data of enhancement layer images.

The videostream decoding apparatus 20 may decode a plurality of layer streams according to the scalable video coding method. The videostream decoding apparatus 20 may decode the base layer images by decoding the base layer stream, and may decode the enhancement layer images by decoding the enhancement layer stream.

For example, a multiview video may be encoded according to the scalable video coding method. For example, left-view images may be reconstructed by decoding a base layer stream, and right-view images may be reconstructed by decoding an enhancement layer stream. As another example, center-view images may be reconstructed by decoding a base layer stream. By further decoding a first enhancement layer stream in addition to the base layer stream, left-view images may be reconstructed. By further decoding a second enhancement layer stream in addition to the base layer stream, right-view images may be reconstructed.

Also, if three or more enhancement layer images exist, first enhancement layer images with respect to a first enhancement layer may be reconstructed from a first enhancement layer stream, and second enhancement layer images may be further reconstructed by further decoding a second enhancement layer stream. By further decoding a kth enhancement layer stream in addition to the first enhancement layer stream, kth enhancement layer images may be further reconstructed.

The videostream decoding apparatus 20 may obtain encoded data of the base layer images and the enhancement layer images from the base layer stream and the enhancement layer stream, and may further obtain a motion vector generated by inter prediction, and disparity information generated by inter-layer prediction.

For example, the videostream decoding apparatus 20 may decode inter-predicted data of each of layers, and may decode data that is inter-layer predicted between a plurality of layers. The reconstruction may be performed by using motion compensation and inter-layer decoding, based on a coding unit or a prediction unit.

Images of each layer stream may be reconstructed by performing motion compensation for a current image by referring to reconstructed images that are predicted via inter prediction using a same layer. The motion compensation means an operation of reconstructing a reconstructed image of the current image by synthesizing a reference image and a residual component of the current image, wherein the reference image is determined by using a motion vector of the current image.

Also, the videostream decoding apparatus 20 may perform the inter-layer decoding by referring to the base layer images, so as to reconstruct the enhancement layer image predicted via the inter-layer prediction. The inter-layer decoding means an operation of reconstructing a reconstructed image of the current image by synthesizing a reference image of another layer and the residual component of the current image, wherein the reference image is determined by using the disparity information of the current image.

The videostream decoding apparatus 20 according to the embodiment may perform the inter-layer decoding so as to reconstruct the second enhancement layer images predicted by referring to the first enhancement layer images.

The videostream decoding apparatus 20 decodes each of blocks of each of images of a video. The block according to the embodiment may be a maximum coding unit, a coding unit, a prediction unit, a transformation unit, etc. from among coding units of a tree structure. For example, the videostream decoding apparatus 20 may reconstruct image sequences by decoding each of layer streams based on blocks of a quadtree structure determined according to a HEVC standard.

The bitstream parser 22 parses the received bitstream. Also, the bitstream parser 22 may perform a function of a receiver. For example, the bitstream parser 22 may include the receiver that receives encoded data of a videostream.

The inter-layer decoder 24 decodes a current view image by generating motion-compensated current view image data by using at least one of current-view image data and another-view image data based on prediction information that is with respect to encoded current-view image data and is obtained from the received encoded data.

The prediction information may include Advanced Motion Vector Prediction Index (AMVP) mode prediction information generated by using a candidate list including two candidates. In addition, the prediction information may further include a motion vector prediction flag indicating a candidate from among the two candidates included in the candidate list, which is used in generating the AMVP mode prediction information.

For example, the inter-layer decoder 24 may fix the number of candidates as 2 in prediction during the AMVP mode, and thus may specify a motion vector by identifying an index of an AMVP candidate by using a flag. During a merge mode, a motion vector may be specified by identifying an index in a merge list by using a merge mode index included in the received encoded data.

The candidate list may include one inter-view candidate, and may further include one of a spatial candidate and temporal candidates.

In an embodiment, the inter-layer decoder 24 may obtain, from the received encoded data, an iv_mv_pred_flag indicator indicating that the encoded current-view image data may be decoded by using the inter-view candidate.

In another embodiment, the inter-layer decoder 24 may obtain, from the received encoded data, at least one of a merge_iv_mv_pred_flag indictor and an amvp_iv_mv_pred_flag indicator, wherein the merge_iv_mv_pred_flag indicator indicates that the inter-view candidate may be used to perform prediction on the encoded current-view image data according to the merge mode, and the amvp_iv_mv_pred_flag indicator indicates that the inter-view candidate may be used to perform prediction on the encoded current-view image data according to the AMVP mode. For example, the inter-layer decoder 24 may obtain all of the merge_iv_mv_pred_flag indicator and the amvp_iv_mv_pred_flag indicator. The merge_iv_mv_pred_flag indicator and the amvp_iv_mv_pred_flag indicator may independently indicate a value.

In an embodiment, the motion vector prediction flag may indicate whether the AMVP mode prediction information was generated by using the inter-view candidate. In a case where it is determined that the inter-view candidate was used, by referring one of the iv_mv_pred_flag indicator and the amvp_iv_mv_pred_flag indicator that indicate that the encoded current-view image data was encoded by using the inter-view candidate, the motion vector prediction flag may indicate that the AMVP mode prediction information was generated by using the inter-view candidate. For example, the encoding apparatus and the decoding apparatus may configure an AMVP list so that the inter-view candidate is disposed at a particular location of the AMVP list. Therefore, in a case where it is determined that the inter-view candidate was used, if the motion vector prediction flag indicates the particular location at which the inter-view candidate is disposed in the AMVP list, the motion vector prediction flag may indicate that the AMVP mode prediction information was generated by using the inter-view candidate, in each block.

The candidate list may be generated to include two candidates from among spatial candidates and temporal candidates. In this case, a motion vector prediction flag may indicate which candidate from among the spatial candidates and the temporal candidates was used to generate the AMVP mode prediction information. For example, the encoding apparatus and the decoding apparatus may configure an AMVP list so that a spatial candidate or a temporal candidate is disposed at a particular location of the AMVP list. Therefore, according to a value of the motion vector prediction flag in each block, the motion vector prediction flag may indicate that the AMVP mode prediction information was generated by using a particular-type candidate from among the spatial candidates and the temporal candidates.

Hereinafter, the inter-layer decoder 24 according to the embodiment is described in detail. The inter-layer decoder 24 obtains, from the received bitstream, a motion vector prediction flag, merge_iv_mv_pred_flag, and amvp_iv_mv_pred_flag. The obtained motion vector prediction flag, merge_iv_mv_pred_flag, and amvp_iv_mv_pred_flag may be used so as to obtain a decoded image by performing motion compensation and inter-view compensation.

In more detail, the inter-layer decoder 24 may obtain a parameter set from the bitstream, and may obtain, from the parameter set, at least one of merge_iv_mv_pred_flag that is a flag indicating that the inter-view candidate was used during the merge mode and amvp_iv_mv_pred_flag that is a flag indicating that the inter-view candidate was used during the AMVP mode. For example, merge_iv_mv_pred_flag and amvp_iv_mv_pred_flag may be obtained from a header of the parameter set. The parameter set includes a video parameter set, a sequence parameter set, and a picture parameter set. Therefore, the inter-layer decoder 24 may obtain at least one of merge_iv_mv_pred_flag and amvp_iv_mv_pred_flag from at least one of the video parameter set, the sequence parameter set, and the picture parameter set. For example, merge_iv_mv_pred_flag and amvp_iv_mv_pred_flag may be included in extension of the video parameter set.

In addition, the inter-layer decoder 24 may obtain a slice segment from a NAL unit, and may obtain the motion vector prediction flag from the slice segment. The motion vector prediction flag may be obtained by a unit of a block and may be used to perform the motion compensation. Here, the block includes a block, a macroblock, a coding tree unit (CTU), a coding unit (CU), a prediction unit (PU), and a transformation unit (TU).

The inter-layer decoder 24 may check whether the inter-view candidate was used in each motion vector prediction mode, by using merge_iv_mv_pred_flag and amvp_iv_mv_pred_flag. In addition, a motion-compensated image may be generated by performing the motion compensation by using the motion vector prediction flag. If the inter-view candidate was used, the inter-layer decoder 24 may recognize whether or not a candidate in the AMVP list, which is indicated by the motion vector prediction flag, is the inter-view candidate, according to an AMVP list configuration that is preset between the encoding apparatus and the decoding apparatus.

If a motion vector prediction candidate is the inter-view candidate, the inter-layer decoder 24 performs the inter-view compensation. If the motion vector prediction candidate is not the inter-view candidate, the inter-layer decoder 24 performs the motion compensation according to a spatial or temporal candidate.

In another embodiment, the inter-view candidate may be used only to generate merge mode prediction information, and when the AMVP mode prediction information is generated, the inter-view candidate may not be used. This circumstance may be preset between the encoding apparatus and the decoding apparatus or may be notified by using a separate flag.

In the embodiment, the inter-layer decoder 24 may obtain, from the received bitstream, at least one of the merge mode prediction information generated by using a candidate list including the inter-view candidate and the AMVP mode prediction information generated by using a candidate list not including the inter-view candidate. For example, merge mode prediction information of an enhancement layer might have been generated by using a merge mode candidate list generated by using candidates including the inter-view candidate, and AMVP mode prediction information of the enhancement layer might have been generated by using an AMVP mode candidate list generated by using candidates excluding the inter-view candidate.

In this case, the inter-layer decoder 24 may refer to a value of an iv_mv_pred_flag indicator indicating whether the inter-view candidate was used to generate prediction information and thus may determine whether the merge mode prediction information was generated by using the merge mode candidate list including the inter-view candidate. For example, if the value of the iv_mv_pred_flag indicator corresponds to a preset value indicating whether the inter-view candidate was used to generate the prediction information, the inter-layer decoder 24 may determine that the inter-view candidate was used to generate the prediction information. For example, in the embodiment, regardless of the value of iv_mv_pred_flag, it is not predicted that the AMVP mode prediction information was generated by using the inter-view candidate.

FIG. 2B illustrates a flowchart of a videostream decoding method performed by the decoding apparatus, according to an embodiment. Referring to FIG. 2B, the decoding apparatus according to the embodiment receives encoded data of a videostream (S210). Next, the decoding apparatus obtains, from the received encoded data, prediction information with respect to encoded current-view image data (S220). Next, the decoding apparatus generates motion-compensated current-view image data by using at least one of current-view image data and another-view image data based on the prediction information, and thus decodes a current-view image (S230).

The prediction information may include Advanced Motion Vector Prediction Index (AMVP) mode prediction information generated by using a candidate list including two candidates, and may further include a motion vector prediction flag indicating a candidate from among the two candidates included in the candidate list, which is used in generating the AMVP mode prediction information.

Hereinafter, a method of reconstructing an image by using motion information received from the encoding apparatus, the method being performed by the decoding apparatus, is described. The decoding apparatus according to the embodiment may receive motion information generated according to a merge mode or an AMVP mode.

The decoding apparatus according to the embodiment generates an AMVP list by using at least one candidate. The decoding apparatus may select, by using a predetermined method, at least one candidate from among spatial candidates, temporal candidates, and inter-view candidates, and may generate the AMVP list by using the at least one selected candidate.

In order to perform compensation on a prediction block, the decoding apparatus may select, by using selected candidate information received from the encoding apparatus, a particular candidate from among candidates included in the AMVP list. For example, the selected candidate information to specify the candidate may be index information of a picture including the candidate and index information of a location where the candidate is located in the AMVP list. In addition to this, the decoding apparatus may receive a residue between a motion vector with respect to the prediction block and a motion vector of the selected candidate from the encoding apparatus. Therefore, the decoding apparatus may generate motion information by using a residue of the selected candidate and the received motion vector.

Hereinafter, a method of obtaining information about a candidate selected from a list in merge mode and AMVP mode prediction, the method being performed by the decoding apparatus, is described. First, a first embodiment in which information about a candidate selected in a merge mode is described. In the first embodiment, the decoding apparatus may use some candidates from among candidates including inter-view candidates, spatial candidates, and temporal candidates. For example, the decoding apparatus may use six candidates from among the candidates. The decoding apparatus may generate a merge list including the six candidates, according to a predetermined method. By using an index received from the encoding apparatus, the decoding apparatus may distinguish between the six candidates included in the list.

FIG. 3 is a block diagram conceptually illustrating an example of generating the merge list including the six candidates in the first embodiment. As illustrated in the example of FIG. 3, the decoding apparatus may select the six candidates by selecting one inter-view candidate and by selecting five spatial candidates, and then may select five candidates from among the 6 selected candidates. To select five candidates from among six candidates may be obtained via a test, and to select the five candidates from among the six candidates may be performed using a same method in the decoding apparatus and the encoding apparatus. For example, an order of candidates statistically having a motion vector that is the least different from a motion vector with respect to a prediction block may be pre-obtained via the test, and the five candidates from among the six candidates may be selected according to the order in each block.

Then, the decoding apparatus may select two temporal candidates, and then may select one candidate from among the selected temporal candidates. To select one candidate from among two candidates may be performed using a same method in the decoding apparatus and the encoding apparatus. For example, an order of candidates statistically having a motion vector that is the least different from a motion vector with respect to a prediction block may be pre-obtained via a test, and one temporal candidate from among the two temporal candidates may be selected according to the order in each block.

Afterward, the decoding apparatus may select the five candidates selected from among the inter-view candidate and the spatial candidates and one temporal candidate selected from among the temporal candidates, as candidates of the merge list including the six candidates.

The decoding apparatus may determine, by using a merge_idx[x0][y0] index received from the encoding apparatus, a candidate that is finally selected from among the six candidates in the merge list of the first embodiment. merge_idx[x0][y0] is an index that specifies an index of a merge candidate selected from the merge candidate list. x0 and y0 indicates a location (x0, y0) of an upper-left luminance sample of the prediction block based on a location of an upper-left luminance sample of a picture where the prediction block is located. If merge_idx[x0][y0] is not provided, a value of merge_idx[x0][y0] may be used as 0.

Next, a second embodiment in which the decoding apparatus generates candidate information during the AMVP mode. In the second embodiment, the decoding apparatus may use some candidates from among candidates including inter-view candidates, spatial candidates, and temporal candidates. For example, the decoding apparatus may use three candidates from among the candidates. The decoding apparatus may generate an AMVP list including the three candidates, according to a predetermined method. By using an index received from the encoding apparatus, the decoding apparatus may distinguish between the three candidates included in the list.

FIG. 4A illustrates a block diagram conceptually illustrating an example of generating the AMVP list including the three candidates in the second embodiment. As illustrated in the example of FIG. 4A, the decoding apparatus selects one inter-view candidate. The decoding apparatus selects five spatial candidates, and then selects two candidates from among the five selected spatial candidates. To select two candidates from among five candidates may be obtained via a test, and to select the two candidates from among the five candidates may be performed using a same method in the decoding apparatus and the encoding apparatus. For example, the decoding apparatus may select two spatial candidates from among the five spatial candidates in an order of candidates statistically having a motion vector that is the least different from a motion vector with respect to a prediction block.

After the decoding apparatus selects two temporal candidates, the decoding apparatus selects one candidate from among the selected temporal candidates. To select one candidate from among two candidates may be obtained via a test, and to select one candidate from among the two candidates may be performed using a same method in the decoding apparatus and the encoding apparatus. For example, one temporal candidate may be selected from among the two temporal candidates in an order of candidates statistically having a motion vector that is the least different from a motion vector with respect to a prediction block.

Afterward, the decoding apparatus selects three candidates from among four selected candidates including one inter-view candidate, the two spatial candidates, and one temporal candidate, and configures the AMVP list. For example, the decoding apparatus may select the three candidates from among the four candidates in an order of candidates statistically having a motion vector that is the least different from a motion vector with respect to a prediction block.

The AMVP list of the second embodiment may indicate a candidate that is finally selected from among the three candidates, by using an index received from the encoding apparatus. For example, the decoding apparatus may use an MVP index that is received from the encoding apparatus and is about a list 0 and a list 1 so as to distinguish between the three candidates during an AMVP mode. For example, the MVP index may include at least one of mvp_l0_idx[x0][y0] and mvp_l1_idx[x0][y0].

mvp_l0_idx[x0][y0] specifies a motion vector prediction index of the list 0. x0 and y0 indicates a location (x0, y0) of an upper-left luminance sample of the prediction block based on a location of an upper-left luminance sample of a picture where the prediction block is located. If mvp_l0_idx[x0][y0] is not provided, a value of mvp_l0_idx[x0][y0] may be used as 0.

mvp_l1_idx[x0][y0] may be used with mvp_10_idx[x0][y0]. For example, mvp_l1_idx[x0][y0] specifies a motion vector prediction index of the list 1. x0 and y0 indicates a location (x0, y0) of an upper-left luminance sample of the prediction block based on a location of an upper-left luminance sample of a picture where the prediction block is located. If mvp_l1_idx[x0][y0] is not provided, a value of mvp_l1_idx[x0][y0] may be used as 0.

In addition, the decoding apparatus may receive, from the encoding apparatus, a flag indicating that the inter-view candidate was used while the candidate information was generated during the merge mode or the AMVP mode. For example, the decoding apparatus may receive, from the encoding apparatus, iv_mv_pred_flag that is a flag indicating that the inter-view candidate was used during the merge mode and the AMVP mode, and may reconstruct an image accordingly. For example, if the inter-view candidate was used during the merge mode and the AMVP mode, iv_mv_pred_flag may have a value of 1, and if the inter-view candidate is not used during any one of both modes, iv_mv_pred_flag may have a value of 0. As another example, if the inter-view candidate was used during any one of the merge mode and the AMVP mode, iv_mv_pred_flag may have a value of 1, and if the inter-view candidate is not used during both modes, iv_mv_pred_flag may have a value of 0. As in the examples, a method of setting a value of iv_mv_pred_flag may be selectively used according to necessity.

In more detail, iv_mv_pred_flag may be generated in each layer. For example, iv_mv_pred_flag may be generated along with iv_mv_pred_flag[layerId], and iv_mv_pred_flag[layerId] may indicate whether inter-view motion prediction is used in decoding a layer having a layer ID value corresponding to layerId. For example, if a value of iv_mv_pred_flag[layerId] is 0, iv_mv_pred_flag[layerId] indicates that the inter-view motion prediction is not used in decoding a layer having a layer ID corresponding to layerId, and if the value of iv_mv_pred_flag[layerId] is 1, iv_mv_pred_flag[layerId] indicates that the inter-view motion prediction may be used in decoding a layer having a layer ID corresponding to layerId. If iv_mv_pred_flag[layerId] is not provided, a value of iv_mv_pred_flag[layerId] may be determined as 0.

In another embodiment, the inter-view candidate may be used only to generate merge mode prediction information, and may not be used in generating AMVP mode prediction information. In this case, the decoding apparatus may refer to a value of an iv_mv_pred_flag indicator indicating whether the inter-view candidate was used to generate prediction information and thus may determine whether the merge mode prediction information was generated by using the merge mode candidate list including the inter-view candidate. In the embodiment, regardless of the value of iv_mv_pred_flag, it is not predicted that the AMVP mode prediction information was generated by using the inter-view candidate. For example, an AMVP mode candidate may include only candidates such as the spatial candidates and the temporal candidates and may exclude the inter-view candidate.

Next, a third embodiment in which candidate information is generated in the AMVP mode is described below. In the third embodiment, the decoding apparatus may use some candidates from among candidates including inter-view candidates, spatial candidates, and temporal candidates. For example, the decoding apparatus may use two candidates from among the candidates. The decoding apparatus may generate an AMVP list including the two candidates, according to a predetermined method. By using a flag, the decoding apparatus may distinguish between the two candidates included in the list.

FIG. 4B is a block diagram conceptually illustrating an example of generating the AMVP list including the two candidates in the third embodiment. As illustrated in the example of FIG. 4B, the encoding apparatus selects one inter-view candidate. The encoding apparatus selects five spatial candidates, and then selects two candidates from among the five selected spatial candidates. To select two candidates from among five candidates may be obtained via a test, and to select the two candidates from among the five candidates may be performed using a same method in the decoding apparatus and the encoding apparatus. For example, the decoding apparatus may pre-determine an order of candidates statistically having a motion vector that is the least different from a motion vector with respect to a prediction block, and may select two spatial candidates from among the five spatial candidates. For example, two candidates having the highest priority from among the five spatial candidates may be selected as the two spatial candidates.

After the decoding apparatus selects two temporal candidates, the decoding apparatus selects one candidate from among the selected temporal candidates. To select one candidate from among two candidates may be obtained via a test, and to select one candidate from among the two candidates may be performed using a same method in the decoding apparatus and the encoding apparatus. For example, the decoding apparatus may pre-determine an order of candidates statistically having a motion vector that is the least different from a motion vector with respect to a prediction block, and according to the determined order, the decoding apparatus may select, as one temporal candidate, a candidate having the highest priority from among two temporal candidates. For example, a candidate having the highest priority from among two temporal candidates may be selected as one temporal candidate.

Afterward, the decoding apparatus selects two candidates from among four selected candidates including one inter-view candidate, the two spatial candidates, and one temporal candidate, and configures the AMVP list. For example, the decoding apparatus may select, by using the aforementioned method, the two candidates from among the four candidates according to the pre-determined order of candidates statistically having the motion vector that is the least different from the motion vector with respect to the prediction block.

The AMVP list of the third embodiment may indicate a candidate that is finally selected from among the two candidates, by using an index received from the encoding apparatus. The AMVP list in the third embodiment only indicates two cases so as to indicate the two candidates, thus, the decoding apparatus may determine, by using the flag having 1 bit, a candidate that indicates prediction information and is from among the candidates in the list. For example, the decoding apparatus may use an MVP flag about a list 0 and a list 1 so as to distinguish between the two candidates during an AMVP mode. For example, the MVP flag may include at least one of mvp_l0_flag[x0][y0] and mvp_l1_flag[x0][y0].

mvp_l0_flag[x0][y0] specifies a motion vector prediction index of the list 0. x0 and y0 indicates a location (x0, y0) of an upper-left luminance sample of the prediction block based on a location of an upper-left luminance sample of a picture where the prediction block is located. If mvp_l0_flag[x0][y0] is not provided, a value of mvp_l0_flag[x0][y0] may be used as 0.

mvp_l1_flag[x0][y0] may be used with mvp_10-flag[x0][y0]. For example, mvp_l1_flag[x0][y0] specifies a motion vector prediction index of the list 1. x0 and y0 indicates a location (x0, y0) of an upper-left luminance sample of the prediction block based on a location of an upper-left luminance sample of a picture where the prediction block is located. If mvp_l1_flag[x0][y0] is not provided, a value of mvp_l1_flag[x0][y0] may be used as 0.

Hereinafter, a method of using, by the decoding apparatus, a flag during each of modes, wherein the flag indicates that the inter-view candidate was used while the candidate information was generated during a merge mode or an AMVP mode, is described.

Unlike iv_mv_pred_flag described with reference to the first and second embodiments, the decoding apparatus according to a fourth embodiment may separately receive, from the encoding apparatus and with respect to each mode, a flag indicating that the inter-view candidate was used while the candidate information was generated during the merge mode or the AMVP mode.

For example, the decoding apparatus may receive merge_iv_mv_pred_flag that is a flag indicating that the inter-view candidate was used during the merge mode, and may generate amvp_iv_mv_pred_flag that is a flag indicating that the inter-view candidate was used during the AMVP mode. The decoding apparatus may separately receive merge_iv_mv_pred_flag and amvp_iv_mv_pred_flag from the encoding apparatus, and a value of merge_iv_mv_pred_flag and a value of amvp_iv_mv_pred_flag may be independent of each other.

For example, if the inter-view candidate was used during the merge mode, merge_iv_mv_pred_flag may have a value of 1, and if the inter-view candidate was not used during the merge mode, iv_mv_pred_flag may have a value of 0. If the inter-view candidate was used during the AMVP mode, amvp_iv_mv_pred_flag may have a value of 1, and if the inter-view candidate was not used during the AMVP mode, iv_mv_pred_flag may have a value of 0.

In more detail, each of merge_iv_mv_pred_flag and amvp_iv_mv_pred_flag may be generated in each layer. For example, merge_iv_mv_pred_flag may be generated along with merge_iv_mv_pred_flag[layerId], and merge_iv_mv_pred flag[layerId] may indicate whether inter-view motion prediction is used, during the merge mode, in decoding a layer having a layer ID value corresponding to layerId. For example, if a value of merge_iv_mv_pred_flag[layerId] is 0, merge_iv_mv_pred flag[layerId] indicates that the inter-view motion prediction is not used, during the merge mode, in decoding a layer having a layer ID corresponding to layerId, and if the value of merge_iv_mv_pred_flag[layerId] is 1, merge_iv_mv_pred_flag[layerId] indicates that the inter-view motion prediction may be used, during the merge mode, in decoding a layer having a layer ID corresponding to layerId. If merge_iv_mv_pred_flag[layerId] is not provided, a value of merge_iv_mv_pred_flag[layerId] may be determined as 0.

Similarly, amvp_iv_mv_pred_flag may be generated along with amvp_iv_mv_pred_flag[layerId], and amvp_iv_mv_pred_flag[layerId] may indicate whether inter-view motion prediction is used, during the AMVP mode, in decoding a layer having a layer ID value corresponding to layerId. For example, if a value of amvp_iv_mv_pred_flag[layerId] is 0, amvp_iv_mv_pred_flag[layerId] indicates that the inter-view motion prediction is not used, during the AMVP mode, in decoding a layer having a layer ID corresponding to layerId, and if the value of amvp_iv_mv_pred_flag[layerId] is 1, amvp_iv_mv_pred_flag[layerId] indicates that the inter-view motion prediction may be used, during the AMVP mode, in decoding a layer having a layer ID corresponding to layerId. If amvp_iv_mv_pred_flag[layerId] is not provided, a value of amvp_iv_mv_pred_flag[layerId] may be determined as 0.

Hereinafter, with reference to FIG. 5, a configuration of inter-layer prediction that may be performed by the encoder 12 of the videostream encoding apparatus 10 according to one or more embodiments is described in detail.

FIG. 5 illustrates an inter-layer prediction structure, according to an embodiment.

An inter-layer encoding system 1600 includes a base layer encoding terminal 1610, an enhancement layer encoding terminal 1660, and an inter-layer prediction terminal 1650 between the base layer encoding terminal 1610 and the enhancement layer encoding terminal 1660. The base layer encoding terminal 1610 and the enhancement layer encoding terminal 1660 may be included in the inter-layer encoder 12.

The base layer encoding terminal 1610 receives an input of a base layer image sequence and encodes each image. The enhancement layer encoding terminal 1660 receives an input of an enhancement layer image sequence and encodes each image. Operations that overlap in operations of the base layer encoding terminal 1610 and operations of the enhancement layer encoding terminal 1660 are simultaneously described below.

A block splitter 1618 or 1668 splits an input image (a low resolution image or a high resolution image) to a maximum coding unit, a coding unit, a prediction unit, a transformation unit, etc. In order to encode the coding unit that is output from the block splitter 1618 or 1668, intra prediction or inter prediction may be performed with respect to each prediction unit of the coding unit. A prediction switch 1648 or 1698 may perform the inter prediction by referring to a reconstructed previous image output from a motion compensator 1640 or 1690 or may perform the intra prediction by using a neighbouring prediction unit of a current prediction unit in a current input image output from an intra predictor 1645 or 1695, based on whether a prediction mode of the prediction unit is an intra prediction mode or an inter prediction mode. Residual information may be generated with respect to each prediction unit via the inter prediction.

Residual information between the prediction unit and a peripheral image is input to a transformer/quantizer 1620 or 1670, according to each prediction unit of the coding unit. The transformer/quantizer 1620 or 1670 may perform transformation and quantization with respect to each transformation unit, based on the transformation unit of the coding unit, and may output a quantized transformation coefficient.

A scaling/inverse transformer 1625 or 1675 may perform scaling and inverse-transformation on the quantized transformation coefficient, according to each transformation unit of the coding unit, and may generate residual information of a spatial domain. When it is controlled to an inter mode due to the prediction switch 1648 or 1698, the residual information may be synthesized with the reconstructed previous image or the neighbouring prediction unit, so that a reconstructed image including the current prediction unit may be generated and a reconstructed current image may be stored in a storage 1630 or 1680. The reconstructed current image may be transferred to the intra predictor 1645 or 1695 / the motion compensator 1640 or 1690, according to a prediction mode of a prediction unit to be next encoded.

In particular, during the inter mode, an in-loop filter 1635 or 1685 may perform at least one of deblocking filtering and Sample Adaptive Offset (SAO) filtering on the reconstructed image stored in the storage 1630 or 1680, according to each coding unit. At least one of the deblocking filtering and the SAO filtering may be performed on the coding unit and at least one of a prediction unit and a transformation unit included in the coding unit.

The deblocking filtering is filtering for smoothing a blocking phenomenon of a data unit, and the SAO filtering is filtering for compensating for a pixel value that has been corrupted while data is encoded and decoded. Data that is filtered by the in-loop filter 1635 or 1685 may be transferred to the motion compensator 1640 or 1690, according to each prediction unit. In order to encode a next coding unit output from the block splitter 1618 or 1668, residual information between the reconstructed current image and the next coding unit may be generated, wherein the reconstructed current image is output from the motion compensator 1640 or 1690 and the next coding unit is output from the block splitter 1618 or 1668.

In this manner, the aforementioned encoding procedure may be repeated with respect to each coding unit of the input image.

Also, for inter-layer prediction, the enhancement layer encoding terminal 1660 may refer to the reconstructed image stored in the storage 1630 of the base layer encoding terminal 1610. An encoding controller 1615 of the base layer encoding terminal 1610 may control the storage 1630 of the base layer encoding terminal 1610, and may transfer the reconstructed image of the base layer encoding terminal 1610 to the enhancement layer encoding terminal 1660. In the inter-layer prediction terminal 1650, an inter-layer filtering unit 1655 may perform the deblocking filtering or the SAO filtering on a reconstructed base layer image output from the storage 1630 of the base layer encoding terminal 1610. When a base layer and an enhancement layer have different resolutions, the inter-layer prediction terminal 1650 may upsample the reconstructed base layer image and may transfer an upsampled reconstructed base layer image to the enhancement layer encoding terminal 1660. When the inter-layer prediction is performed according to a control by the switch 1698 of the enhancement layer encoding terminal 1660, the inter-layer prediction may be performed on an enhancement layer image by referring to the reconstructed base layer image that is transferred via the inter-layer prediction terminal 1650.

In order to encode an image, various encoding modes for a coding unit, a prediction unit, and a transformation unit may be set. For example, as an encoding mode for the coding unit, a depth, split information (e.g., a split flag), or the like may be set. As an encoding mode for the prediction unit, a prediction mode, a partition type, intra direction information, reference list information, or the like may be set. As an encoding mode for the prediction unit, a transformation depth, split information or the like may be set.

The base layer encoding terminal 1610 may perform encoding by using each of various depths for the coding unit, each of various modes for the prediction unit, each of various partition types, each of various intra directions, each of various reference lists, and each of various transformation depths for the transformation unit, and according to results of the performances, the base layer encoding terminal 1610 may determine an encoding depth, a prediction mode, a partition type, intra direction/reference list, a transformation depth, etc. that have the highest encoding efficiency. However, an encoding mode determined by the base layer encoding terminal 1610 is not limited to the aforementioned encoding modes.

The encoding controller 1615 of the base layer encoding terminal 1610 may control various encoding modes to be appropriately applied to operations of each configuring element. Also, for inter-layer encoding in the enhancement layer encoding terminal 1660, the encoding controller 1615 may control the enhancement layer encoding terminal 1660 to determine an encoding mode or residual information by referring to the encoding results from the base layer encoding terminal 1610.

For example, the enhancement layer encoding terminal 1660 may use an encoding mode of the base layer encoding terminal 1610 as an encoding mode for the enhancement layer image, or may determine the encoding mode for the enhancement layer image by referring to an encoding mode of the base layer encoding terminal 1610. The encoding controller 1615 of the base layer encoding terminal 1610 may use a current encoding mode from the encoding mode of the base layer encoding terminal 1610 so as to determine a current encoding mode of the enhancement layer encoding terminal 1660 by controlling a control signal of the encoding controller 1665 of the enhancement layer encoding terminal 1660.

Similar to the inter-layer encoding system 1600 based on an inter-layer prediction technique shown in FIG. 5, an inter-layer decoding system based on the inter-layer prediction technique may be embodied. That is, the inter-layer decoding system for a multilayer video may receive a base layer bitstream and an enhancement layer bitstream. A base layer decoding terminal of the inter-layer decoding system may decode the base layer bitstream and may reconstruct base layer images. An enhancement layer decoding terminal of the inter-layer decoding system for the multilayer video may decode the enhancement layer bitstream by using a reconstructed base layer image and parsed encoding information and may reconstruct enhancement layer images.

If the encoder 12 of the videostream encoding apparatus 10 according to one or more embodiments performed the inter-layer prediction, the decoder 24 of the videostream decoding apparatus 20 may reconstruct multilayer images, according to the inter-layer decoding system.

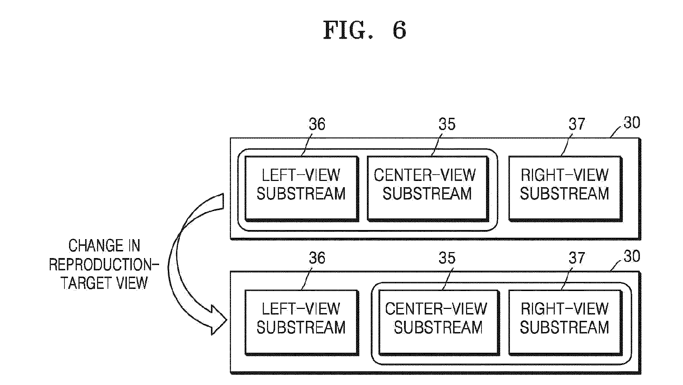

Hereinafter, with reference to FIG. 6, an embodiment in which the videostream encoding apparatus 10 and the videostream decoding apparatus 20 apply an inter-layer prediction structure to a multiview video is described in detail. In an inter-view prediction structure with respect to the multiview video, an individual view video corresponds to each layer, thus, the inter-view prediction structure may be interpreted as the inter-layer prediction structure.

FIG. 6 illustrates an inter-layer prediction structure with respect to a multiview videostream.

A multiview videostream 30 according to an embodiment includes a center-view substream 35, a left-view substream 36, and a right-view substream 37.

The center-view substream 35 includes a bitstream generated by encoding center-view images. The left-view substream 36 includes a bitstream generated by encoding left-view images. The right-view substream 37 includes a bitstream generated by encoding right-view images.

In order to decode a video of desired views, there is no need to decode substreams of all views but only substreams of particular views may be extracted from the multiview videostream 30, may be decoded, and may be reproduced. Also, since the multiview videostream 30 includes streams of a plurality of views, reproduction-target views may be selected.

For example, if it is selected to reproduce only a center-view video and a left-view video, only the center-view substream 35 and the left-view substream 36 may be extracted from the multiview videostream 30 and may be decoded.

Also, while a center-view video and a left-view video are reproduced, a view may be changed so that the center-view video and a right-view video may be reproduced. In this case, the center-view substream 35 and the left-view substream 36 are extracted from the multiview videostream 30 and are decoded, and after the view is changed, the center-view substream 35 and the right-view substream 37 may be extracted and decoded.

According to the related technology, a point where a reproduction-target view can be changed is limited to a random access point, i.e., an RAP image such as a CRA image, a BLA image, or an IDR image.

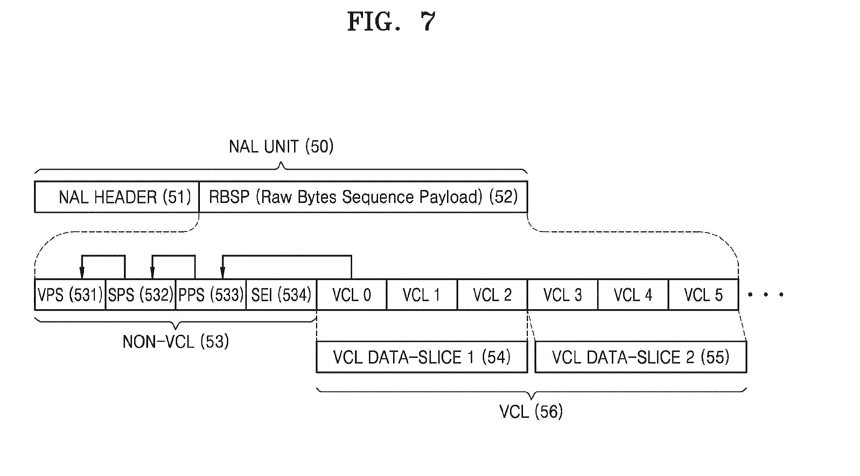

Hereinafter, with reference to FIG. 7, various embodiments in which the videostream encoding apparatus 10 and the videostream decoding apparatus 20 signal information with respect to a changeable inter-layer prediction method are described in detail.

FIG. 7 illustrates a structure of a network abstract layer (NAL) unit.

The videostream encoding apparatus 10 may capsulate a videostream in the form of a NAL unit 50 so as to configure the videostream including encoded data and window-related information, so that the videostream may have a format eligible for network transmission. The NAL unit 50 may be configured of a NAL header 51 and a raw bytes sequence payload (RBSP) 52.

The RBSP 52 may be divided into a non-video coding layer (non-VCL) NAL unit 53 and a video coding layer (VCL) NAL unit 56. The VCL NAL unit 56 may include a sample value of video data or encoded data of the sample value. The non-VCL NAL unit 53 may include a parameter set including parameters related to the video data included in the VCL NAL unit 56, and time information or additional data.

In more detail, the non-VCL NAL unit 53 may include a VPS 531, an SPS 532, a picture parameter set (PPS) 533, and an SEI message 534. The VPS 531 may include parameters, such as an entire characteristic about currently-encoded video sequences, which are required to decode an entire video sequence. The SPS 532 may include parameters required to decode a current video sequence. The PPS 533 may include parameters required to decode a current picture. The SEI message 534 may include the time information or the additional data, which is useful information in improving video decoding functionality but is not always required for decoding.

The VCL NAL unit 56 may include actually encoded data of slices, such as VCL NAL units 54 including encoded data of a slice 1 and VCL NAL units 55 including encoded data of a slice 2.

A set of the SPS 532, the picture parameter set (PPS) 533, the SEI message 534, and the VCL NAL unit 56 indicates one video sequence, i.e., a videostream of a single layer. The SPS 532 may refer to one or more parameters of the VPS 531. The PPS 533 may refer to one or more parameters of the SPS 532. The VCL NAL unit 56 may refer to one or more parameters of the PPS 533.

For convenience of description, in the NAL unit 50 of FIG. 7, only one set of the SPS 532, the picture parameter set (PPS) 533, the SEI message 534, and the VCL NAL unit 56 is illustrated at a lower level of the VPS 531. However, if video sequences of a plurality of layers are allocated to the lower level of the VPS 531, after the VCL NAL unit 56, an SPS, a PPS, a SEI message, and a VCL NAL unit may be followed for another video sequence.

Also, the videostream encoding apparatus 10 may generate the NAL unit 50 that further includes a VPS extension area for including additional information that is not included in the VPS 531. The videostream decoding apparatus 20 may obtain, from the VPS extension area of the NAL unit 50, RAP reference layer number information, non-RAP reference layer number information, RAP reference layer identification information, non-RAP reference layer identification information, and a plurality of pieces of standard usage information.

The videostream encoding apparatus 10 of FIG. 1A may generate samples by performing intra prediction, inter prediction, inter-layer prediction, transformation, and quantization on each of image blocks, may perform entropy-encoding on the samples, and thus may output a bitstream. In order to output a video encoding result, i.e., a base layer videostream and an enhancement layer videostream, from the videostream encoding apparatus 10, the videostream encoding apparatus 10 may interoperate with an internal video encoding processor that is internally embedded or an external video encoding processor, and thus may perform a video encoding operation including transformation and quantization. The internal video encoding processor of the videostream encoding apparatus 10 may be a separate processor, or a video encoding apparatus or a central processing unit (CPU), a graphical operational unit includes a video encoding processing module and thus performs a basic video encoding operation.

Also, the videostream decoding apparatus 20 of FIG. 2A performs decoding on each of a received base layer videostream and a received enhancement layer videostream. That is, inverse-quantization, inverse-transformation, intra prediction, and motion compensation (motion compensation between images, inter-layer disparity compensation) may be performed on each of image blocks of the base layer videostream and the enhancement layer videostream, so that samples of base layer images may be reconstructed from the base layer videostream, and samples of enhancement layer images may be reconstructed from the enhancement layer videostream. In order to output a reconstructed image generated according to a decoding result, the videostream decoding apparatus 20 according to the embodiment may interoperate with an internally-embedded video decoding processor or an external video decoding processor, and thus may perform a video reconstructing operation including inverse-quantization, inverse-transformation, prediction/compensation. The internal video decoding processor of the videostream decoding apparatus 20 may be a separate processor, or a video decoding apparatus or a CPU, a graphical operational unit includes a video decoding processing module and thus performs a basic video reconstructing operation.

The videostream encoding apparatus 10 and the videostream decoding apparatus 20 according to the embodiments split blocks of divided video data into coding units of a tree structure, and encoding units, prediction units, and transformation units are used for inter-layer prediction or inter-prediction of the coding unit. Hereinafter, with reference to FIGS. 8 through 20, a video encoding method and apparatus therefor, and a video decoding method and apparatus therefor, based on coding units and transformation units of a tree structure, are described.

Basically, in an encoding/decoding procedure for a multilayer video, an encoding/decoding procedure for base layer images, and an encoding/decoding procedure for enhancement layer images are separately performed. That is, when inter-layer prediction occurs in the multilayer video, encoding/decoding results of a single layer video may be mutually referred to, but an encoding/decoding procedure is performed for each of single layer videos.

Therefore, for convenience of description, a video encoding procedure and a video decoding procedure based on coding units of a tree structure that are described layer with reference to FIGS. 8 through 20 are a video encoding procedure and a video decoding procedure for a single layer video, thus, inter-prediction and motion compensation are described in detail. However, as described above with reference to FIGS. 1A through 7B, for encoding/decoding a videostream, inter-layer prediction and compensation between base layer images and enhancement layer images are performed.

Therefore, in order for the encoder 12 of the videostream encoding apparatus 10 according to the embodiment to encode a multilayer video, based on coding units of a tree structure, the encoder 12 may include video encoding apparatuses 100 of FIG. 8 corresponding to the number of layers of a multilayer video so as to perform video encoding on each of single layer videos, and may control the video encoding apparatuses 100 to encode the single layer videos, respectively. Also, the videostream encoding apparatus 10 may perform inter-view prediction by using encoding results with respect to discrete single views obtained by the video encoding apparatuses 100. Accordingly, the encoder 12 of the videostream encoding apparatus 10 may generate a base layer videostream and an enhancement layer videostream that include an encoding result of each layer.

Similarly, in order for the decoder 24 of the videostream decoding apparatus 20 to decode a multilayer video, based on coding units of a tree structure, the decoder 24 may include video decoding apparatuses 200 of FIG. 9 corresponding to the number of layers of a multilayer video so as to perform video decoding on each of layers of a received base layer videostream and a received enhancement layer videostream, and may control the video decoding apparatuses 200 to decode single layer videos, respectively. Then, the videostream decoding apparatus 20 may perform inter-layer compensation by using decoding results with respect to discrete single layers obtained by the video decoding apparatuses 200. Accordingly, the decoder 24 of the videostream decoding apparatus 20 may generate base layer images and enhancement layer images that are reconstructed for each of the layers.

FIG. 8 illustrates a block diagram of a video encoding apparatus based on coding units of a tree structure 100, according to an embodiment.

The video encoding apparatus involving video prediction based on coding units of the tree structure 100 includes a coding unit determiner 120 and an output unit 130. Hereinafter, for convenience of description, the video encoding apparatus involving video prediction based on coding units of the tree structure 100 is referred as 'video encoding apparatus 100'.

The coding unit determiner 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment is an index related to the number of splitting times from a maximum coding unit to a minimum coding unit. A first maximum depth according to an embodiment may denote the total number of splitting times from the maximum coding unit to the minimum coding unit. A second maximum depth according to an embodiment may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type may selectively include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

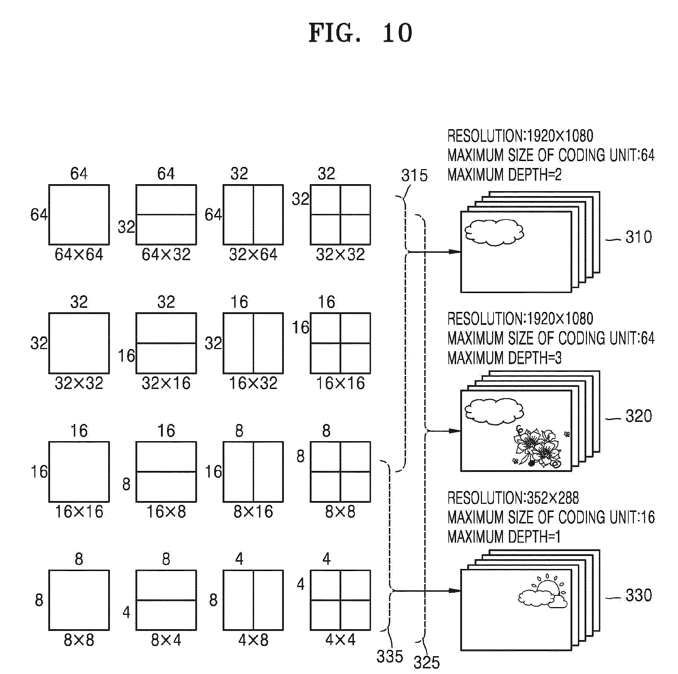

Coding units according to a tree structure in a maximum coding unit and methods of determining a prediction unit/partition, and a transformation unit, according to embodiments, will be described in detail later with reference to FIGS. 10 through 20.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction during an inter mode, about a reference image index of the inter mode, about a motion vector, about a chroma component of an intra mode, and about an interpolation method during the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information, prediction information, and slice type information that are related to prediction.

According to the simplest embodiment for the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to the embodiment, image compression efficiency may be increased since a coding unit is adjusted while considering characteristics of an image while increasing a maximum size of a coding unit while considering a size of the image.

The videostream encoding apparatus 10 described above with reference to FIG. 1A may include the video encoding apparatuses 100 corresponding to the number of layers so as to encode single layer images in each of the layers of a multilayer video. For example, the base layer encoder 11 may include one video encoding apparatus 100, and the enhancement layer encoder 13 may include the video encoding apparatuses 100 corresponding to the number of enhancement layers.

When the video encoding apparatuses 100 encode base layer images, the coding unit determiner 120 may determine a prediction unit for inter-image prediction for each of coding units of a tree structure according to each maximum coding unit, and may perform the inter-image prediction on each prediction unit.

When the video encoding apparatuses 100 encode enhancement layer images, the coding unit determiner 120 may determine prediction units and coding units of a tree structure according to each maximum coding unit, and may perform inter-prediction on each of the prediction units.

FIG. 9 illustrates a block diagram of a video decoding apparatus based on coding units of a tree structure 200, according to an embodiment.

The video decoding apparatus involving video prediction based on coding units of the tree structure 200 according to the embodiment includes a receiver 210, an image data and encoding information extractor 220, and an image data decoder 230. Hereinafter, for convenience of description, the video decoding apparatus involving video prediction based on coding units of the tree structure 200 according to the embodiment is referred as 'video decoding apparatus 200'.

Definitions of various terms, such as a coding unit, a depth, a prediction unit, a transformation unit, and information about various encoding modes, for decoding operations of the video decoding apparatus 200 according to the embodiment are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. That is, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 reconstructs the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial domain of the coding unit may be reconstructed.

The image data decoder 230 may determine a coded depth of a current maximum coding unit by using split information according to depths. If the split information indicates that image data is no longer split in the current depth, the current depth is a coded depth. Accordingly, the image data decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The encoder 12 of the videostream encoding apparatus 10 described above with reference to FIG. 1A may include the image data decoders 230 of the video decoding apparatuses 200 corresponding to the number of layers so as to generate a reference image for inter prediction in each of layers of a multilayer video.

Also, the decoder 24 of the videostream decoding apparatus 20 described above with reference to FIG. 2A may include the video decoding apparatuses 200 corresponding to the number of views, so as to decode a received base layer image stream and a received enhancement layer image stream and to reconstruct base layer images and enhancement layer images.

When the base layer image stream is received, the image data decoder 230 of the video decoding apparatus 200 may split samples of the base layer images, which are extracted from the base layer image stream by an extractor 220, into coding units according to a tree structure of a maximum coding unit. The image data decoder 230 may perform motion compensation, based on prediction units for the inter-image prediction, on each of the coding units according to the tree structure of the samples of the base layer images, and may reconstruct the base layer images.

When the enhancement layer image stream is received, the image data decoder 230 of the video decoding apparatus 200 may split samples of the enhancement layer images, which are extracted from the enhancement layer image stream by the extractor 220, into coding units according to a tree structure of a maximum coding unit. The image data decoder 230 may perform motion compensation, based on prediction units for the inter-image prediction, on each of the coding units of the samples of the enhancement layer images, and may reconstruct the enhancement layer images.

Thus, the video decoding apparatus 200 may obtain information about at least one coding unit that generates the minimum encoding error when encoding is recursively performed for each maximum coding unit, and may use the information to decode the current picture. That is, the coding units having the tree structure determined to be the optimum coding units in each maximum coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using information about an optimum encoding mode received from an encoder.

FIG. 10 illustrates a diagram for describing a concept of coding units according to an embodiment.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes the total number of splits from a maximum coding unit to a minimum decoder.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. On the other hand, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, an expression capability with respect to detailed information may be improved.

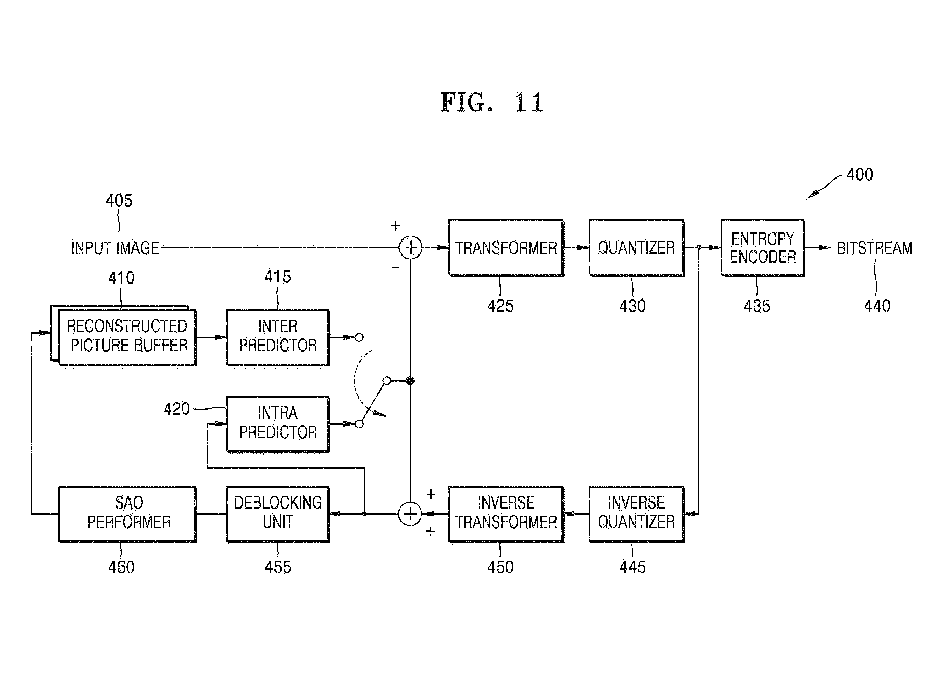

FIG. 11 illustrates a block diagram of an image encoder 400 based on coding units, according to an embodiment.

The image encoder 400 according to the embodiment performs operations of the video encoding apparatus 100 to encode image data. That is, an intra predictor 420 performs intra prediction on a coding unit in an intra mode and from among a current image 405, according to prediction units, and an inter predictor 415 performs inter prediction on a coding unit in an inter mode according to prediction units, by using a reference image obtained from the current image 405 and a reconstructed picture buffer 410. The current image 405 may be split by a maximum coding unit and may be sequentially encoded. Here, encoding may be performed on coding units of a tree structure, which are split from the maximum coding unit.

Prediction data with respect to the coding unit in each mode output from the intra predictor 420 or the inter predictor 415 is subtracted from data with respect to an encoded coding unit of the current image 405, so that residue data is generated. The residue data is output as a quantized transformation coefficient of each transformation unit through a transformer 425 and a quantizer 430. The quantized transformation coefficient is reconstructed as residue data of a spatial domain through an inverse quantizer 445 and an inverse transformer 450. The reconstructed residue data of the spatial domain is added to the prediction data with respect to the coding unit in each mode output from the intra predictor 420 or the inter predictor 415, and thus is reconstructed as data of the spatial domain with respect to the coding unit of the current image 405. The reconstructed data of the spatial domain is generated as a reconstructed image through a deblocking unit 455 and an SAO performer 460. The generated reconstructed image is stored in the reconstructed picture buffer 410. Reconstructed images stored in the reconstructed picture buffer 410 may be used as a reference image for inter prediction with respect to another image. The transformation coefficient quantized in the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the inverse quantizer 445, the inverse transformer 450, the deblocking unit 455, and the SAO performer 460 may perform operations based on each coding unit among coding units according to a tree structure in each maximum coding unit.

In particular, the intra predictor 420 and the inter predictor 415 may determine a partition mode and a prediction mode of each coding unit from among the coding units according to a tree structure by referring to a maximum size and a maximum depth of a current maximum coding unit, and the transformer 425 may determine whether or not to split a transformation unit according to a quadtree in each coding unit from among the coding units according to the tree structure.

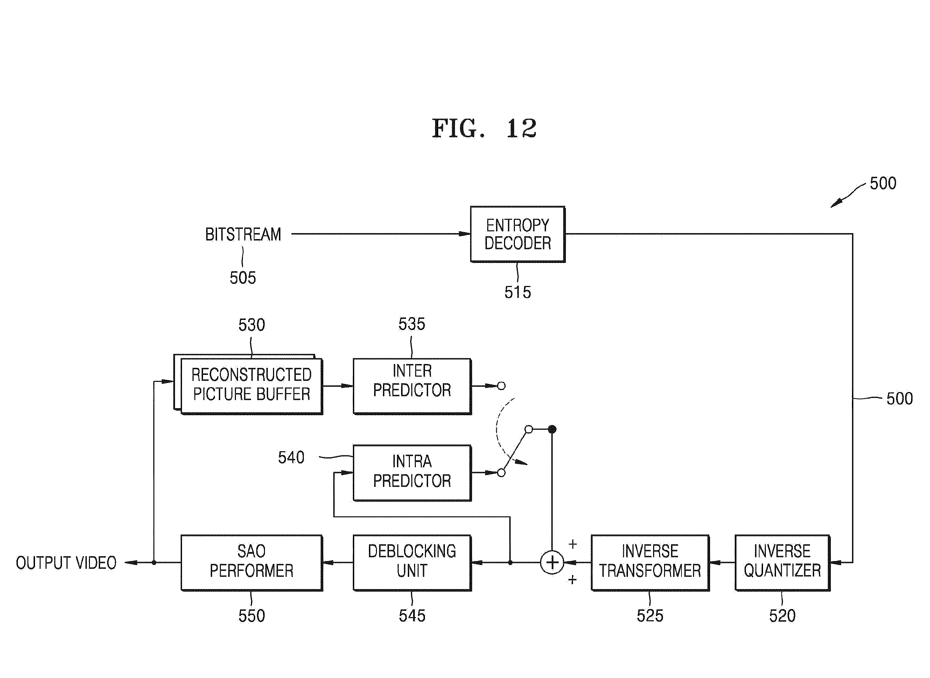

FIG. 12 illustrates a block diagram of an image decoder 500 based on coding units, according to an embodiment.

An entropy decoder 515 parses, from a bitstream 505, encoded image data to be decoded and encoding information required for decoding. The encoded image data is as a quantized transformation unit, and an inverse quantizer 520 and an inverse transformer 525 reconstruct residue data from the quantized transformation unit.

An intra predictor 540 performs intra prediction on a coding unit in an intra mode according to prediction units. An inter predictor 535 performs inter prediction by using a reference image with respect to a coding unit in an inter mode from among a current image, which is obtained by a reconstructed picture buffer 530 according to prediction units.

Prediction data with respect to the coding unit in each mode which passed through the intra predictor 540 or the inter predictor 535, and the residue data are added, so that data of a spatial domain with respect to the coding unit of the current image 405 may be reconstructed, and the reconstructed data of the spatial domain may be output as a output video through a deblocking unit 545 and an SAO performer 550.

In order for the image data decoder 230 of the video decoding apparatus 200 to decode the image data, operations after the entropy decoder 515 of the image decoder 500 may be sequentially performed.

In order for the image decoder 500 to be applied in the video decoding apparatus 200, all elements of the image decoder 500, i.e., the entropy decoder 515, the inverse quantizer 520, the inverse transformer 525, the intra predictor 540, the inter predictor 535, the deblocking unit 545, and the SAO performer 550 may perform operations based on each coding unit from among coding units according to a tree structure for each maximum coding unit.

In particular, the intra predictor 540 and the inter predictor 535 may determine a partition mode and a prediction mode of each coding unit from among the coding units according to a tree structure, and the inverse transformer 525 may determine whether or not to split a transformation unit according to a quadtree in each coding unit.

The encoding operation of FIG. 11 and the decoding operation of FIG. 12 are described as a videostream encoding operation and a videostream decoding operation, respectively, in a single layer. Therefore, if the encoder 12 of FIG. 1A encodes a videostream of at least two layers, the encoder 12 may include the image encoder 400 for each of layers. Similarly, if the decoder 24 of FIG. 2A decodes a videostream of at least two layers, the decoder 24 may include the image decoder 500 for each of layers.

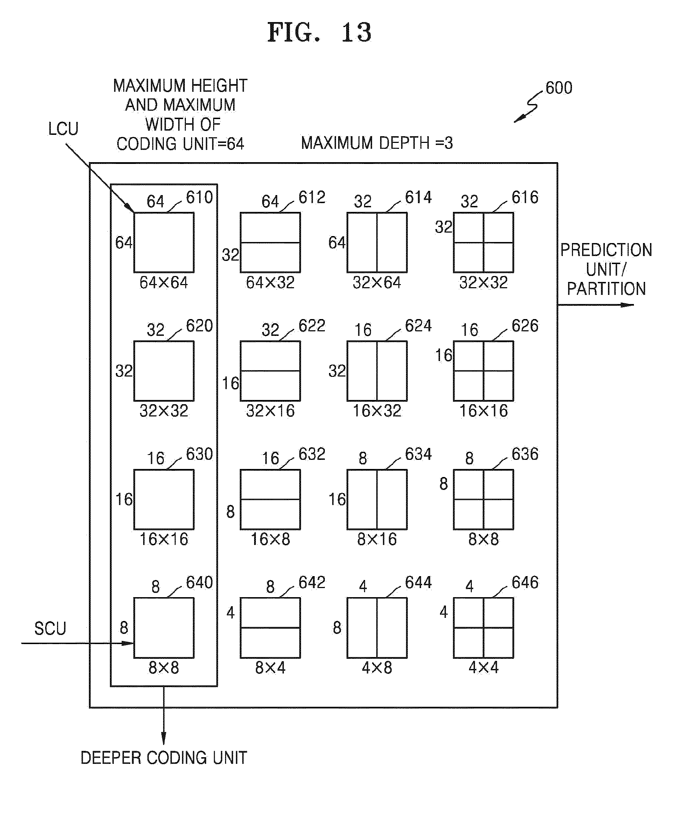

FIG. 13 illustrates a diagram illustrating deeper coding units according to depths, and partitions, according to an embodiment.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having the size of 8x8 and the depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoder 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error that is a representative encoding error may be selected for the current depth by performing encoding for each prediction unit in the coding units corresponding to the current depth, along the horizontal axis of the hierarchical structure 600. Alternatively, the minimum encoding error may be searched for by comparing representative encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

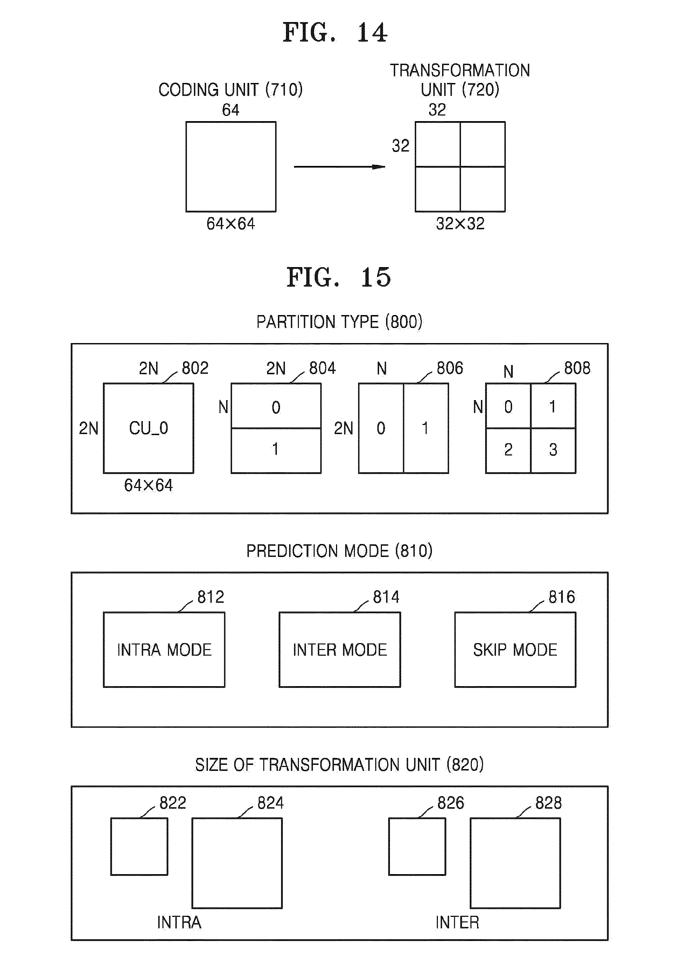

FIG. 14 illustrates a diagram for describing a relationship between a coding unit 710 and transformation units 720, according to an embodiment.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error with respect to an original image may be selected.

FIG. 15 illustrates a plurality of pieces of encoding information according to depths, according to an embodiment.

The output unit 130 of the video encoding apparatus 100 may encode and transmit partition type information 800, prediction mode information 810, and transformation unit size information 820 for each coding unit corresponding to a coded depth, as information about an encoding mode.

The partition type information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the partition type information 800 is set to indicate one of the partition 804 having a size of 2NxN, the partition 806 having a size of Nx2N, and the partition 808 having a size of NxN.

The prediction mode information 810 indicates a prediction mode of each partition. For example, the prediction mode information 810 may indicate a mode of prediction encoding performed on a partition indicated by the partition type information 800, i.e., an intra mode 812, an inter mode 814, or a skip mode 816.

The transformation unit size information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the partition type information 800, the prediction mode information 810, and the transformation unit size information 820 for decoding, according to each deeper coding unit.

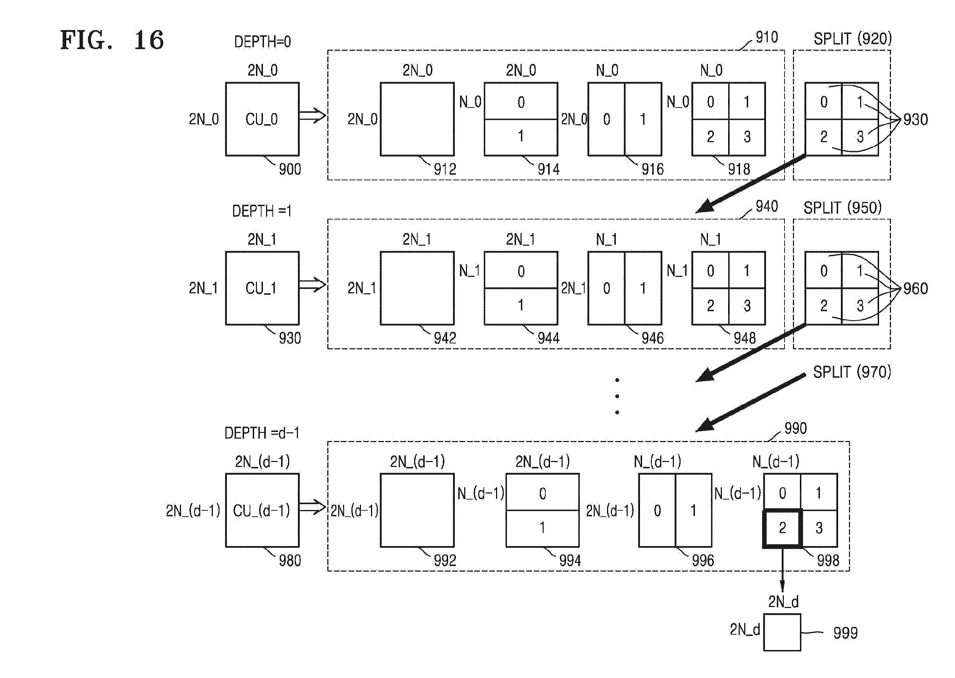

FIG. 16 is a diagram of deeper coding units according to depths, according to an embodiment.

Split information may be used to indicate a change of a depth. The spilt information indicates whether a coding unit of a current depth is split into coding units of a lower depth.

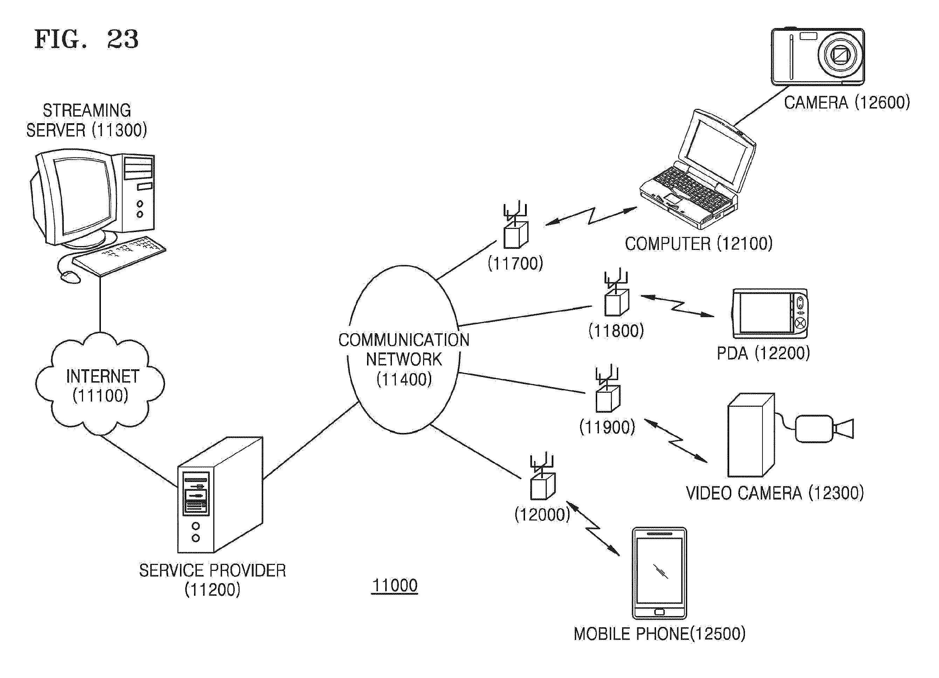

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 23 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912, 914, and 916 having the sizes of 2N_0x2N_0, 2N_0xN_0 and N_0x2N_0, the prediction unit 910 may not be split into a lower depth.

If the encoding error is the smallest in the partition type 918 having the size of N_0xN_0, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1 xN_1, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d, split information for the minimum coding unit 980 is not set.

A data unit 999 may be a 'minimum unit' for the current maximum coding unit. A minimum unit according to the embodiment may be a square data unit obtained by splitting a minimum coding unit 980 having a lowermost coded depth by 4. By performing the encoding repeatedly, the video encoding apparatus 100 according to the embodiment may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 0, 1, ..., d-1, d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to '0', and split information of depths excluding the coded depth is set to '1'.

The image data and encoding information extractor 220 of the video decoding apparatus 200 according to the embodiment may extract and use the information about the coded depth and the prediction unit of the coding unit 900 to decode the partition 912. The video decoding apparatus 200 according to the embodiment may determine a depth, in which split information is '0', as a coded depth by using split information according to depths, and use information about an encoding mode of the corresponding depth for decoding.

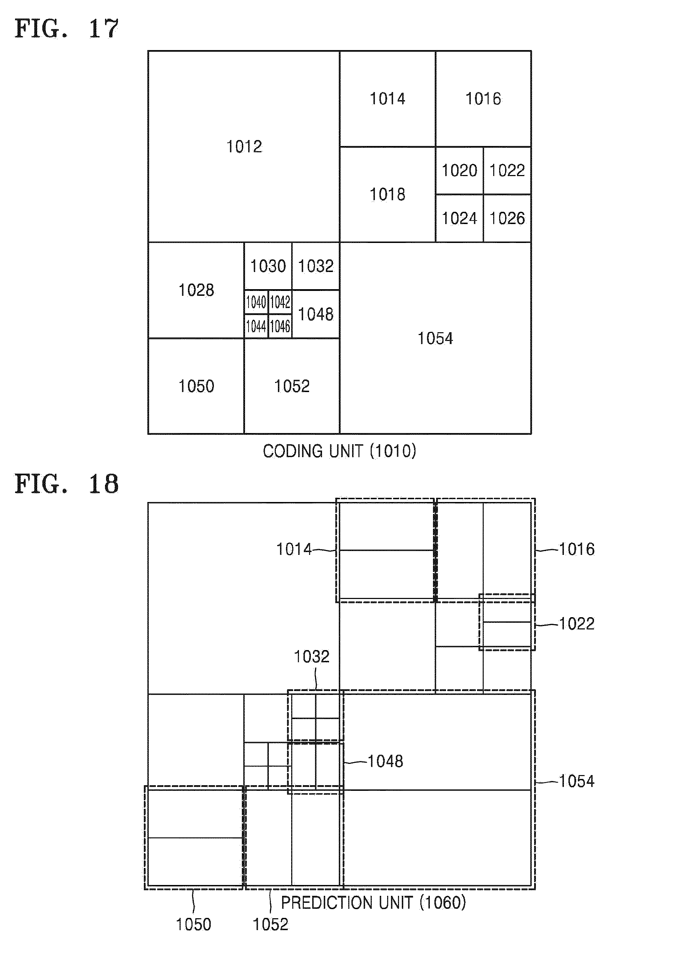

FIGS. 17, 18, and 19 are diagrams for describing a relationship between coding units, prediction units, and transformation units, according to embodiments.

Coding units 1010 are deeper coding units according to depths determined by the video encoding apparatus 100, in a maximum coding unit. Prediction units 1060 are partitions of prediction units of each of the coding units 1010, and transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoders 1014, 1016, 1022, 1032, 1048, 1050, 1052, and 1054 are obtained by splitting the coding units in the encoders 1010. That is, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding apparatus 100 and the video decoding apparatus 200 according to the embodiments may perform intra prediction / motion estimation / motion compensation / and transformation/inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 below shows the encoding information that may be set by the video encoding apparatus 100 and the video decoding apparatus 200 according to the embodiments.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| | Symmetrical Partition Type | Asymmetrical Partition Type | Split Information 0 of Transformation Unit | Split Information 1 of Transformation Unit | Repeatedly Encode Coding Units having Lower Depth of d+1 |
| Intra Inter Skip (Only 2Nx2N) | 2Nx2N 2NxN Nx2N NxN | 2NxnU 2NxnD nLx2N nRx2N | 2Nx2N | NxN (Symmetrical Partition Type) N/2xN/2 (Asymmetrical Partition Type) | |

The output unit 130 of the video encoding apparatus 100 according to the embodiment may output the encoding information about the coding units having a tree structure, and the image data and encoding information extractor 220 of the video decoding apparatus 200 according to the embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure according to the embodiment may be assigned to at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

In another embodiment, if a current coding unit is predicted based on encoding information of adjacent data units, data units adjacent to the current coding unit are searched using encoded information of the data units, and the searched adjacent coding units may be referred for predicting the current coding unit.

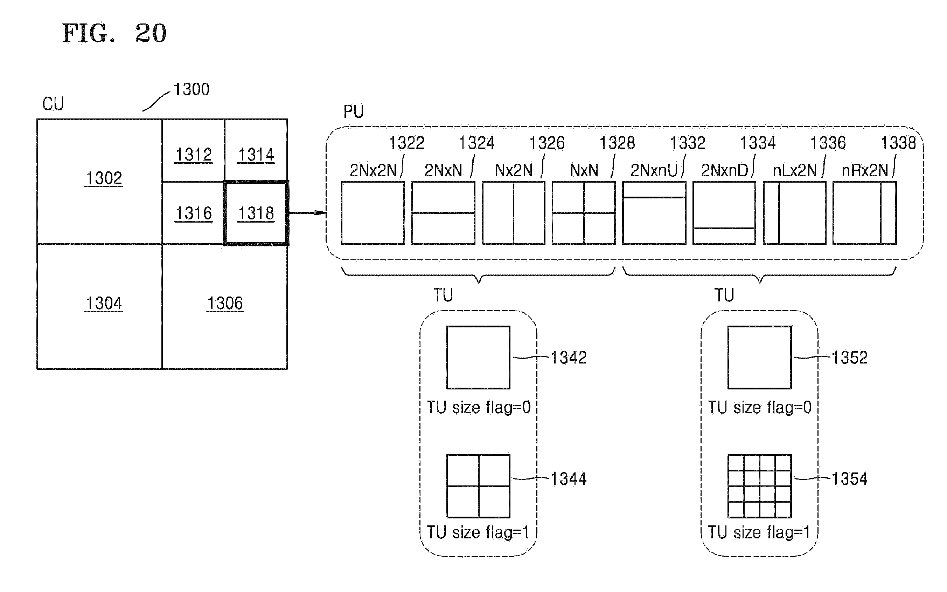

FIG. 20 illustrates a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of partition types including 2Nx2N 1322, 2NxN 1324, Nx2N 1326, NxN 1328, 2NxnU 1332, 2NxnD 1334, nLx2N 1336, and nRx2N 1338.

Transformation unit split information (TU size flag) is a type of a transformation index. A size of a transformation unit corresponding to the transformation index may be changed according to a prediction unit type or partition type of the coding unit.

For example, when the information about the partition type is set to be one of symmetrical partition types 2Nx2N 1322, 2NxN 1324, Nx2N 1326, and NxN 1328, if the transformation unit split information is 0, a transformation unit 1342 having a size of 2Nx2N is set, and if the transformation unit split information is 1, a transformation unit 1344 having a size of NxN is set.

When the information about the partition type is set to be one of asymmetrical partition types 2NxnU 1332, 2NxnD 1334, nLx2N 1336, and nRx2N 1338, if the transformation unit split information is 0, a transformation unit 1352 having a size of 2Nx2N may be set, and if the transformation unit split information is 1, a transformation unit 1354 having a size of N/2xN/2 may be set.

As described above with reference to FIG. 20, the transformation unit split information (TU size flag) is a flag having a value or 0 or 1, but the transformation unit split information is not limited to a flag having 1 bit, and the transformation unit may be hierarchically split while the transformation unit split information increases in a manner of 0, 1, 2, 3.. etc., according to setting. The transformation unit split information may be an example of the transformation index.

In this case, the size of a transformation unit that has been actually used may be expressed by using the transformation unit split information according to the embodiment, together with a maximum size of the transformation unit and a minimum size of the transformation unit. The video encoding apparatus 100 according to the embodiment is capable of encoding maximum transformation unit size information, minimum transformation unit size information, and maximum transformation unit split information. The result of encoding the maximum transformation unit size information, the minimum transformation unit size information, and the maximum transformation unit split information may be inserted into an SPS. The video decoding apparatus 200 according to the embodiment may decode video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit may be defined by Equation (1):

$$CurrMinTuSize$$

$$= max (MinTransformSize, RootTuSize/(2^{MaxTransformSizeIndex})) \ ... \ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. That is, in Equation (1), 'RootTuSize/(2^MaxTransformSizeIndex)' denotes a transformation unit size when the transformation unit size 'RootTuSize', when the TU size flag is 0, is split by the number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \ ......... \ (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \ ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an embodiment, and a factor for determining the current maximum transformation unit size is not limited thereto.

According to the video encoding method based on coding units of a tree structure described above with reference to FIGS. 8 through 20, image data of a spatial domain is encoded in each of the coding units of the tree structure, and the image data of the spatial domain is reconstructed in a manner that decoding is performed on each maximum coding unit according to the video decoding method based on the coding units of the tree structure, so that a video that is formed of pictures and pictures sequences may be reconstructed. The reconstructed video may be reproduced by a reproducing apparatus, may be stored in a storage medium, or may be transmitted via a network.

The one or more embodiments can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

For convenience of description, the videostream encoding methods and/or the video encoding method, which are described with reference to FIGS. 1A through 20, will be collectively referred to as 'the video encoding method '.

Also, the videostream decoding methods and/or the video decoding method, which are described with reference to FIGS. 1A through 20, will be collectively referred to as 'the video decoding method'.

Also, a video encoding apparatus including the videostream encoding apparatus 10, the video encoding apparatus 100, or the image encoder 400, which is described with reference to FIGS. 1A through 20, will be collectively referred as a 'video encoding apparatus'. Also, a video decoding apparatus including the videostream decoding apparatus 20, the video decoding apparatus 200, or the image decoder 500, which is described with reference to FIGS. 1A through 20, will be referred to as a 'video decoding apparatus'.

A computer-readable recording medium storing a program, e.g., a disc 26000, according to an embodiment will now be described in detail.

FIG. 21 illustrates a diagram of a physical structure of the disc 26000 in which a program is stored, according to an embodiment. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

A computer system embodied using a storage medium that stores a program for executing the video encoding method and the video decoding method as described above will now be described with reference to FIG. 22.

FIG. 22 illustrates a diagram of a disc drive 26800 for recording and reading a program by using the disc 26000. A computer system 26700 may store a program that executes at least one of a video encoding method and a video decoding method according to an embodiment, in the disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method according to an embodiment may be stored not only in the disc 26000 illustrated in FIGS. 21 and 22 but also may be stored in a memory card, a ROM cassette, or a solid state drive (SSD).

A system to which the video encoding method and the video decoding method described above are applied will be described below.

FIG. 23 illustrates a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 23, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to embodiments.

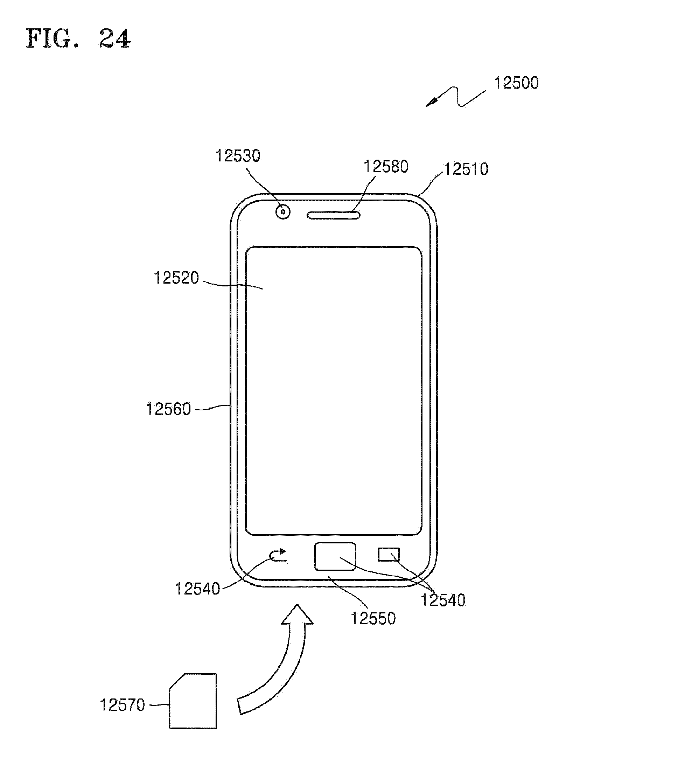

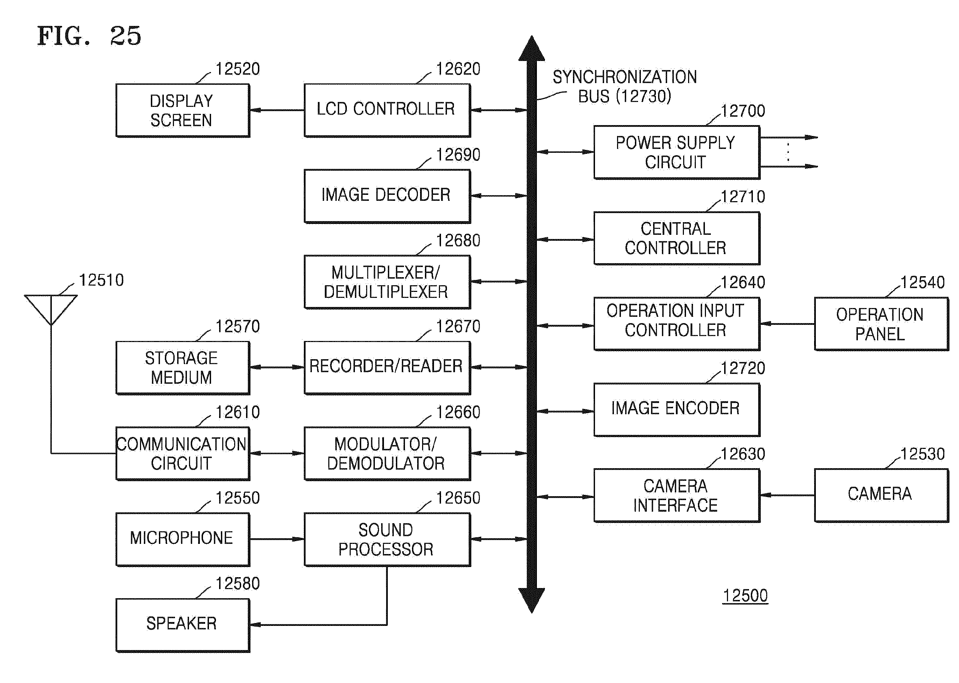

With reference to FIGS. 24 and 25, the mobile phone 12500 included in the content supply system 11000 according to an embodiment will now be described in detail.

FIG. 24 illustrates an external structure of the mobile phone 12500 to which a video encoding method and a video decoding method are applied, according to an embodiment. The mobile phone 12500 may be a smart phone, the functions of which are not limited and a large number of the functions of which may be changed or expanded.

The mobile phone 12500 includes an internal antenna 12510 via which a radiofrequency (RF) signal may be exchanged with the wireless base station 12000, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of a sound output unit, and a microphone 12550 for inputting voice and sound or another type of a sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500. In order to systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 to an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 by control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, by control of the central controller 12710. The digital sound signal may be transformed into a transformation signal via the modulation/demodulation unit 12660 and the communication circuit 12610, and may be transmitted via the antenna 12510.

When a text message, e.g., email, is transmitted during a data communication mode, text data of the text message is input via the operation panel 12540 and is transmitted to the central controller 12610 via the operation input controller 12640. By control of the central controller 12610, the text data is transformed into a transmission signal via the modulation/demodulation unit 12660 and the communication circuit 12610 and is transmitted to the wireless base station 12000 via the antenna 12510.

In order to transmit image data during the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 described above. The image encoder 12720 may transform the image data received from the camera 12530 into compressed and encoded image data according to the aforementioned video encoding method, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoder 12690, the sound processor 12650, or the LCD controller 12620, according to the type of the digital signal.

During the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, by control of the central controller 12710.

When during the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoder 12690 and the sound processor 12650, respectively.

A structure of the image decoder 12690 may correspond to that of the video decoding apparatus described above. The image decoder 12690 may decode the encoded video data to obtain reconstructed video data and provide the reconstructed video data to the display screen 12520 via the LCD controller 12620, by using the aforementioned video decoding method according to the embodiment.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment, may be a transmitting terminal including only the video encoding apparatus, or may be a receiving terminal including only the video decoding apparatus.

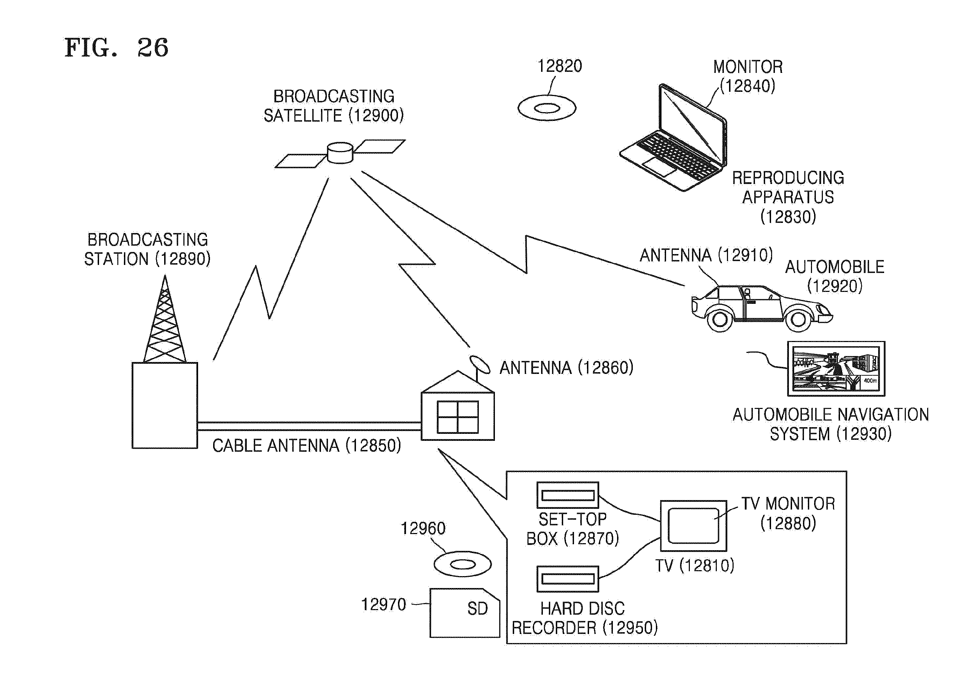

A communication system according to an embodiment is not limited to the communication system described above with reference to FIG. 23. For example, FIG. 26 illustrates a digital broadcasting system employing a communication system, according to an embodiment. The digital broadcasting system of FIG. 26 may receive a digital broadcast transmitted via a satellite or a terrestrial network by using the video encoding apparatus and the video decoding apparatus according to the embodiments.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded videostream may be decoded and reproduced by a TV receiver 12810, a set-top box 12870, or another device.

When the video decoding apparatus according to the embodiment is implemented in a reproducing apparatus 12830, the reproducing apparatus 12830 may parse and decode an encoded videostream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus according to the embodiment may be installed. Data output from the set-top box 12870 may also be reproduced on a TV monitor 12880.

As another example, the video decoding apparatus according to the embodiment may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus according to the embodiment and may then be stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to the embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 25. For example, the computer 12100 and the TV receiver 12810 may not include the camera 12530, the camera interface 12630, and the image encoder 12720 of FIG. 25.

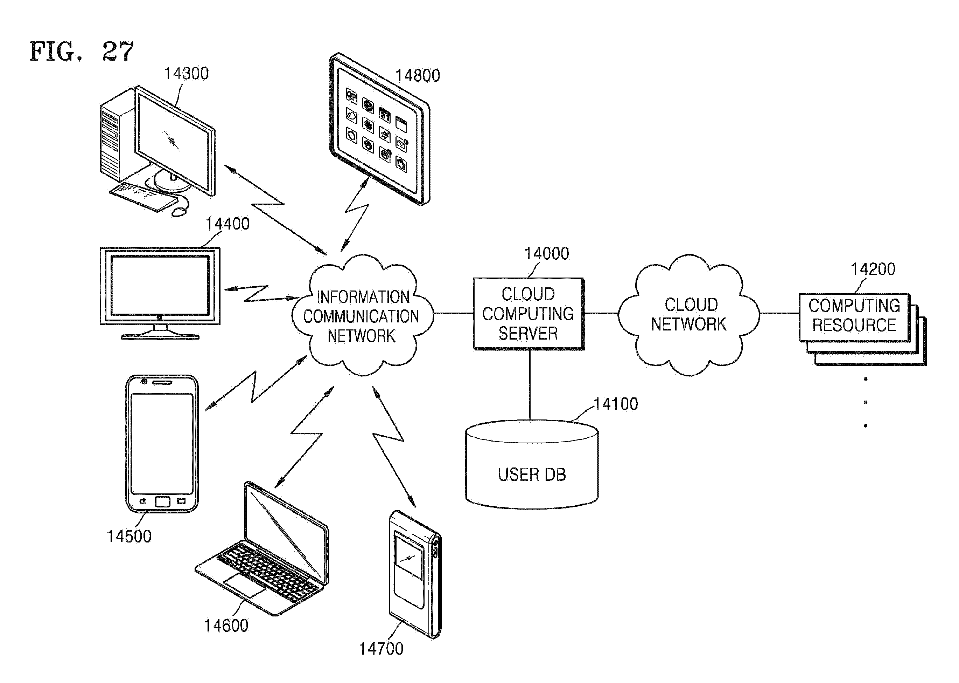

FIG. 27 is a diagram illustrating a network structure of a cloud computing system using a video encoding apparatus and a video decoding apparatus, according to an embodiment.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security software, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce the video service is received from the smart phone 14500, the cloud computing server 14000 searches for and reproduces the video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus as described above with reference to FIGS. 1A through 20. In another example, the user terminal may include the video encoding apparatus as described above with reference to FIGS. 1A through 20. Alternatively, the user terminal may include both the video decoding apparatus and the video encoding apparatus as described above with reference to FIGS. 1A through 20.

Various applications of the video encoding method, the video decoding method, the video encoding apparatus,

and the video decoding apparatus according to the embodiments described above with reference to FIGS. 1A through 20 are described above with reference to FIGS. 21 through 27. However, methods of storing the video encoding method and the video decoding method in a storage medium or methods of implementing the video encoding apparatus and the video decoding apparatus in a device described above with reference to FIGS. 1A through 20 are not limited to the embodiments described above with reference to FIGS. 21 through 27.

While this disclosure has been particularly shown and described with reference to embodiments thereof, it will be understood by those of ordinary skill in the art that various changes in form and details may be made therein without departing from the spirit and scope of the following claims. The embodiments should be considered in a descriptive sense only and not for purposes of limitation. Therefore, the scope of the disclosure is defined not by the detailed description of the disclosure but by the appended claims, and all differences within the scope will be construed as being included in the disclosure.

**Claims**

1.  A videostream decoding method being performed by a videostream decoding apparatus and comprising:

    receiving encoded data of a videostream;
    obtaining prediction information about encoded current-view image data from the received encoded data; and
    decoding a current-view image by generating motion-compensated current-view image data by using at least one of current-view image data and another-view image data based on the prediction information,
    wherein the prediction information comprises Advanced Motion Vector Prediction (AMVP) mode prediction information generated by using a candidate list comprising two candidates, and further comprises a motion vector prediction flag indicating a candidate from among the two candidates comprised in the candidate list, which is used in generating the AMVP mode prediction information.

2.  The videostream decoding method of claim 1, wherein the candidate list comprises an inter-view candidate, and further comprises one of a spatial candidate and temporal candidates.

3.  The videostream decoding method of claim 2, wherein the obtaining of the prediction information comprises obtaining, from the received encoded data, at least one of a merge_iv_mv_pred_flag indictor and an amvp_iv_mv_pred_flag indicator, wherein the merge_iv_mv_pred_flag indicator indicates that the inter-view candidate is usable so as to perform prediction on the encoded current-view image data according to a merge mode, and the amvp_iv_mv_pred_flag indicator indicates that the inter-view candidate is usable so as to perform prediction on the encoded current-view image data according to an AMVP mode.

4.  The videostream decoding method of claim 3, wherein the obtaining of the indicator comprises obtaining the merge_iv_mv_pred flag indictor and the amvp_iv_mv_pred_flag indicator, and
    the merge_iv_mv_pred flag indictor and the amvp_iv_mv_pred_flag indicator indicate values independently of each other.

5.  The videostream decoding method of claim 1, wherein the candidate list comprises two candidates from among spatial candidates and temporal candidates.

6.  The videostream decoding method of claim 1, wherein the prediction information further comprises merge mode prediction information generated by using a candidate list comprising the inter-view candidate, and
    the AMVP mode prediction information is generated by using a candidate list that does not comprise the inter-view candidate.

7.  The videostream decoding method of claim 6, further comprising obtaining, from the received encoded data, an iv_mv_pred_flag indicator indicating that the encoded current-view image data is decodable by using the inter-view candidate.

8.  A videostream encoding method being performed by a videostream encoding apparatus and comprising:

    encoding a current-view image by generating prediction information of the current view image by using at least one of current-view image data and another-view image data, and thus generating encoded current-view image data; and

outputting the encoded current-view image data and the prediction information,
wherein the prediction information comprises Advanced Motion Vector Prediction (AMVP) mode prediction information generated by using a candidate list comprising two candidates, and further comprises a motion vector prediction flag indicating a candidate from among the two candidates comprised in the candidate list, which is used in generating the AMVP mode prediction information.

9. The videostream encoding method of claim 8, wherein the candidate list comprises an inter-view candidate, and further comprises one of a spatial candidate and temporal candidates.

10. The videostream encoding method of claim 9, the generating of the encoded current-view image data comprises generating at least one of a merge_iv_mv_pred flag indictor and an amvp iv_mv_pred flag indicator, wherein the merge_iv_mv_pred_flag indicator indicates that the inter-view candidate is usable so as to perform prediction on the encoded current-view image data according to a merge mode, and the amvp iv_mv_pred flag indicator indicates that the inter-view candidate is usable so as to perform prediction on the encoded current-view image data according to an AMVP mode.

11. The videostream encoding method of claim 10, wherein the generating of the indicator comprises generating the merge_iv_mv_pred flag indicator and the amvp iv_mv_pred flag indicator, so that that whether merge mode prediction information comprises the inter-view candidate and whether AMVP mode prediction information comprises the inter-view candidate are set independently of each other.

12. The videostream encoding method of claim 8, wherein the prediction information further comprises merge mode prediction information generated by using a candidate list comprising the inter-view candidate, and
the AMVP mode prediction information is generated by using a candidate list that does not comprise the inter-view candidate.

13. A videostream decoding apparatus comprising:

a receiver configured to receive encoded data of a videostream; and
a decoder configured to decode a current-view image by generating motion-compensated current-view image data by using at least one of current-view image data and another-view image data based on prediction information that is about encoded current-view image data and is obtained from the received encoded data,
wherein the prediction information comprises Advanced Motion Vector Prediction (AMVP) mode prediction information generated by using a candidate list comprising two candidates, and further comprises a motion vector prediction flag indicating a candidate from among the two candidates comprised in the candidate list, which is used in generating the AMVP mode prediction information.

14. A videostream encoding apparatus comprising:

an encoder configured to encode a current-view image by generating prediction information of the current view image by using at least one of current-view image data and another-view image data, and thus to generate encoded current-view image data; and
an output unit configured to output the encoded current-view image data and the prediction information,
wherein the prediction information comprises Advanced Motion Vector Prediction (AMVP) mode prediction information generated by using a candidate list comprising two candidates, and further comprises a motion vector prediction flag indicating a candidate from among the two candidates comprised in the candidate list, which is used in generating the AMVP mode prediction information.

15. A computer-readable recording medium having recorded thereon a computer program for executing the videostream decoding method of claim 1, by using a computer.

## FIG. 1A

10

12

14

| INTER-LAYER ENCODER | → | BITSTREAM GENERATOR |

## FIG. 1B

START

↓

ENCODE CURRENT-VIEW IMAGE BY GENERATING PREDICTION INFORMATION OF CURRENT VIEW IMAGE BY USING AT LEAST ONE OF CURRENT-VIEW IMAGE DATA AND ANOTHER-VIEW IMAGE DATA AND THUS GENERATE ENCODED CURRENT-VIEW IMAGE DATA — S110

↓

OUTPUT ENCODED CURRENT-VIEW IMAGE DATA AND PREDICTION INFORMATION — S120

↓

END

# FIG. 2A

20

| BITSTREAM PARSER | 22 | INTER-LAYER DECODER | 24 |

# FIG. 2B

```
START
```

RECEIVE ENCODED DATA OF VIDEOSTREAM — S210

OBTAIN, FROM RECEIVED ENCODED DATA, PREDICTION INFORMATION WITH RESPECT TO ENCODED CURRENT-VIEW IMAGE DATA — S220

GENERATE MOTION-COMPENSATED CURRENT VIEW IMAGE DATA BY USING AT LEAST ONE OF CURRENT-VIEW IMAGE DATA AND — S230

```
END
```

FIG. 3

A | 1.INTER-VIEW CANDIDATE(1)
2. SPATIAL CANDIDATE(5) | → | SELECT 5 CANDIDATES

MERGE MODE

SELECT 6 CANDIDATES

B | 1. TEMPORAL CANDIDATE(2) | → | SELECT 1 CANDIDATE

FIG. 4A

A | 1. INTER-VIEW CANDIDATE(1) | → | SELECT 1 CANDIDATE

AMVP MODE

SELECT 3 CANDIDATE

B | 1. SPATIAL CANDIDATE(5) | → | SELECT 2 CANDIDATE

B | 1. INTER-VIEW CANDIDATE(2) | → | SELECT 1 CANDIDATE

FIG. 4B

A | 1. INTER-VIEW CANDIDATE(1) | → | SELECT 1 CANDIDATE

AMVP MODE

SELECT 2 CANDIDATES

B | 1. SPATIAL CANDIDATE(5) | → | SELECT 2 CANDIDATE

B | 1. INTER-VIEW CANDIDATE(2) | → | SELECT 1 CANDIDATE

# FIG. 5

1600

1660

ENHANCEMENT LAYER

ENHANCEMENT LAYER IMAGE SEQUENCE →

1668
BLOCK SPLITTER

+ Σ −

1670
TRANSFORMER/ QUANTIZER

1698

1675
SCALING/INVERSE TRANSFORMER

1665
ENCODING CONTROLLER

1663

1690
MOTION COMPENSATOR

1695
INTRA PREDICTOR

1685
IN-LOOP FILTER

1680
STORAGE

1650

INTER-LAYER PREDICTION

1655
INTER-LAYER FILTERING UNIT

1610

1635
IN-LOOP FILTER

1630
STORAGE

1615
ENCODING CONTROLLER

1640
MOTION COMPENSATOR

1645
INTRA PREDICTOR

1648

1625
SCALING/INVERSE TRANSFORMER

BASE LAYER IMAGE SEQUENCE →

1618
BLOCK SPLITTER

+ Σ −

1620
TRANSFORMER/ QUANTIZER

BASE LAYER

FIG. 6

CHANGE IN
REPRODUCTION-
TARGET VIEW

36 35 37 30

| LEFT-VIEW SUBSTREAM | CENTER-VIEW SUBSTREAM | RIGHT-VIEW SUBSTREAM |

36 35 37 30

| LEFT-VIEW SUBSTREAM | CENTER-VIEW SUBSTREAM | RIGHT-VIEW SUBSTREAM |

# FIG. 7

EP 2 983 366 A1

NAL UNIT (50)

| NAL HEADER (51) | RBSP (Raw Bytes Sequence Payload) (52) |

| VPS (531) | SPS (532) | PPS (533) | SEI (534) | VCL 0 | VCL 1 | VCL 2 | VCL 3 | VCL 4 | VCL 5 | · · · |

NON-VCL (53)

| VCL DATA-SLICE 1 (54) | VCL DATA-SLICE 2 (55) |

VCL (56)

# FIG. 8

100

| 110 | 120 | 130 |
|---|---|---|
| MAXIMUM CODING UNIT SPLITTER | CODING UNIT DETERMINER | OUTPUT UNIT |

# FIG. 9

200

| 210 | 220 | 230 |
|---|---|---|
| RECEIVER | IMAGE DATA AND ENCODING INFORMATION EXTRACTOR | IMAGE DATA DECODER |

# FIG. 10

64
64 | 64×64

64
32 | 64×32

32
64 | 32×64

32
32 | 32×32

32
32 | 32×32

32
16 | 32×16

16
32 | 16×32

16
16 | 16×16

16
16 | 16×16

16
8 | 16×8

8
16 | 8×16

8
8 | 8×8

8
8 | 8×8

8
4 | 8×4

4
8 | 4×8

4
4 | 4×4

315

335  325

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

FIG. 11

## FIG. 12

# FIG. 13

MAXIMUM HEIGHT
AND MAXIMUM
WIDTH OF
CODING UNIT=64       MAXIMUM DEPTH =3

LCU

600

64 / 610
64
64×64

64 / 612
32
64×32

32 / 614
64
32×64

32 / 616
32
32×32

32 / 620
32
32×32

32 / 622
16
32×16

16 / 624
32
16×32

16 / 626
16
16×16

16 / 630
16
16×16

16 / 632
8
16×8

8 / 634
16
8×16

8 / 636
8
8×8

8 / 640
8
8×8

8 / 642
4
8×4

4 / 644
8
4×8

4 / 646
4
4×4

SCU

PREDICTION
UNIT/
PARTITION

DEEPER CODING UNIT

# FIG. 14

CODING UNIT (710)

TRANSFORMATION
UNIT (720)

64

64×64

32

32

32×32

# FIG. 15

PARTITION TYPE (800)

2N ⟋802    2N ⟋804    N ⟋806    N ⟋808

2N  CU_0

64×64

N

0

1

2N

0  1

N

0  1

2  3

PREDICTION MODE (810)

⟋812

INTRA MODE

⟋814

INTER MODE

⟋816

SKIP MODE

SIZE OF TRANSFORMATION UNIT (820)

⟋822   ⟋824

INTRA

⟋826   ⟋828

INTER

**FIG. 16**

FIG. 17

CODING UNIT (1010)

FIG. 18

PREDICTION UNIT (1060)

# FIG. 19

1014— · —1016

1022

1032

1048

1054

TRANSFORMATION UNIT (1070)

1050    1052

FIG. 20

## FIG. 21

Se

Tr

DISC (26000)

## FIG. 22

26700

26800

26000

# FIG. 23

STREAMING SERVER (11300)

CAMERA (12600)

COMPUTER (12100)

(11700)

INTERNET (11100)

COMMUNICATION NETWORK (11400)

(11800)

PDA (12200)

(11900)

VIDEO CAMERA (12300)

SERVICE PROVIDER (11200)

11000

(12000)

MOBILE PHONE(12500)

EP 2 983 366 A1

## FIG. 24

12500

12530    12580    12510

12520

12560

12540

12550    12540

12570

# FIG. 25

DISPLAY SCREEN — 12520

LCD CONTROLLER — 12620

SYNCHRONIZATION BUS (12730)

POWER SUPPLY CIRCUIT — 12700

IMAGE DECODER — 12690

CENTRAL CONTROLLER — 12710

MULTIPLEXER/ DEMULTIPLEXER — 12680

OPERATION INPUT CONTROLLER — 12640

OPERATION PANEL — 12540

STORAGE MEDIUM — 12570

RECORDER/READER — 12670

IMAGE ENCODER — 12720

COMMUNICATION CIRCUIT — 12610

MODULATOR/ DEMODULATOR — 12660

CAMERA INTERFACE — 12630

CAMERA — 12530

MICROPHONE — 12550

SOUND PROCESSOR — 12650

SPEAKER — 12580

12510

12500

EP 2 983 366 A1

57

# FIG. 26

BROADCASTING SATELLITE (12900)

12820

MONITOR (12840)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

SET-TOP BOX (12870)

TV MONITOR (12880)

12960

TV (12810)

12970  SD

HARD DISC RECORDER (12950)

EP 2 983 366 A1

FIG. 27

14300

14800

14400

INFORMATION
COMMUNICATION
NETWORK

14000

CLOUD
COMPUTING
SERVER

14200

CLOUD
NETWORK

COMPUTING
RESOURCE

14500

14100

USER DB

14600

14700

EP 2 983 366 A1

**EP 2 983 366 A1**

**INTERNATIONAL SEARCH REPORT**

| International application No. |
| --- |
| **PCT/KR2014/003001** |

**A. CLASSIFICATION OF SUBJECT MATTER**

*H04N 19/51(2014.01)i*

According to International Patent Classification (IPC) or to both national classification and IPC

**B. FIELDS SEARCHED**

Minimum documentation searched (classification system followed by classification symbols)
H04N 19/51; H04N 19/109; H04N 7/26; H04N 7/32; H04N 19/105

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: prediction, flag, candidate, decoding

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2013-0002242 A (KT CORPORATION) 07 January 2013<br>See abstract, paragraphs [0111]-[0151], claims 1, 11 and figures 5-10. | 1-15 |
| A | KR 10-2010-0048435 A (SK TELECOM CO., LTD.) 11 May 2010<br>See paragraphs [0096]-[0130], claims 1, 10-16 and figures 14-17. | 1-15 |
| A | KR 10-2012-0068743 A (ELECTRONICS AND TELECOMMUNICATIONS RESEARCH INSTITUTE) 27 June 2012<br>See paragraphs [0148]-[0171], claims 1-2, 10-13 and figure 7. | 1-15 |
| A | WO 2012-097749 A1 (MEDIATEK INC.) 26 July 2012<br>See paragraphs [0017]-[0024], claims 1-15 and figures 2-4. | 1-15 |
| A | US 2012-0320984 A1 (ZHOU, Minhua) 20 December 2012<br>See abstract, paragraphs [0048]-[0057], claims 1-4 and figure 4. | 1-15 |

☐ Further documents are listed in the continuation of Box C.    ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 08 JULY 2014 (08.07.2014) | **08 JULY 2014 (08.07.2014)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

60

INTERNATIONAL SEARCH REPORT
Information on patent family members

International application No.

**PCT/KR2014/003001**

| Patent document cited in search report | Publication date | Patent family member | Publication date |
|---|---|---|---|
| KR 10-2013-0002242 A | 07/01/2013 | NONE | |
| KR 10-2010-0048435 A | 11/05/2010 | CN 102273206 A | 07/12/2011 |
| | | CN 102273206 B | 07/05/2014 |
| | | CN 103297784 A | 11/09/2013 |
| | | CN 103297785 A | 11/09/2013 |
| | | CN 103327338 A | 25/09/2013 |
| | | CN 103354614 A | 16/10/2013 |
| | | KR 10-1314632 B1 | 04/10/2013 |
| | | KR 10-1316710 B1 | 10/10/2013 |
| | | KR 10-2013-0076837 A | 08/07/2013 |
| | | KR 10-2013-0098252 A | 04/09/2013 |
| | | US 2011-0211640 A1 | 01/09/2011 |
| | | WO 2010-050706 A2 | 06/05/2010 |
| | | WO 2010-050706 A3 | 05/08/2010 |
| KR 10-2012-0068743 A | 27/06/2012 | JP 2014-501091 A | 16/01/2014 |
| | | US 2013-0243088 A1 | 19/09/2013 |
| | | WO 2012-081949 A2 | 21/06/2012 |
| | | WO 2012-081949 A3 | 07/09/2012 |
| WO 2012-097749 A1 | 26/07/2012 | AU 2012-208842 A1 | 02/05/2013 |
| | | CN 103299630 A | 11/09/2013 |
| | | EP 2666297 A1 | 27/11/2013 |
| | | SG 189843 A1 | 28/06/2013 |
| | | US 2013-0208804 A1 | 15/08/2013 |
| US 2012-0320984 A1 | 20/12/2012 | NONE | |

Form PCT/ISA/210 (patent family annex) (July 2009)